# EUROPEAN PATENT APPLICATION

(11) **EP 4 484 488 A1**
(43) Date of publication of application: **01.01.2025**
(21) Application number: 23759624.2
(22) Date of filing: 02.02.2023
(51) Int. Cl.: C08L 9/06, B60C 1/00, C08C 19/00, C08F 2/06, C08K 3/04, C08L 7/00, C08L 9/00

(54) **RUBBER COMPOSITION FOR SIDEWALL**

(30) Priority: 25.02.2022 JP 2022028351
(71) Applicant: ZS Elastomers Co., Ltd., Tokyo 100-8246 (JP); Zeon Corporation, Tokyo 100-8246 (JP)
(72) Inventor: SUGIMURA, Takeshi, Tokyo 100-8246 (JP); KURAMOTO, Naoaki, Tokyo 100-8246 (JP); KARATO, Takeshi, Tokyo 100-8246 (JP)
(74) Representative: Maiwald GmbH
(86) International application number: PCT/JP2023/003429
(87) International publication number: WO 2023/162618

(57) **Abstract**

Provided is a rubber composition for sidewalls comprising a solution-polymerized aromatic vinyl-conjugated diene copolymer and carbon, wherein the solution-polymerized aromatic vinyl-conjugated diene copolymer has a functional group capable of interacting with carbon, the content of an aromatic vinyl monomer unit is 0.5 to 25% by weight, and the vinyl bond content of a conjugated diene monomer unit is 0 to 50% by weight.

## Description

### TECHNICAL FIELD

The present invention relates to a rubber composition for sidewalls which can provide a cross-linked rubber having remarkably reduced heat buildup and having reinforcing ability and tear resistance in a good balance, and can be suitably used in applications to sidewalls.

### BACKGROUND ART

Sidewalls of tires are parts that affect steering stability and durability of the tires. In order to impart sufficient steering stability and durability to the tires, the sidewalls need to have reinforcing ability imparted by a reinforcement material such as carbon. Also, recent environmental and resource issues have created a growing demand for low heat buildup (high fuel efficiency). An important feature for sidewalls is excellent tear resistance that enables the tires to have a longer lifespan.

For example, Patent Document 1 discloses a rubber composition for large pneumatic tires for freeways comprising a blended rubber containing 10 to 80 parts by weight of a polybutadiene rubber blended with a different diene rubber, the polybutadiene rubber having an atomic group represented by General Formula below in the polymer chain, and 30 to 90 parts by weight of carbon black compounded relative to 100 parts by weight of the blended rubber, the carbon black having an iodine adsorption of 40 to 150 mg/g, a nitrogen specific surface area of 40 to 150 m²/g, a DBP oil absorption of 60 to 140 ml/100 g, and a tint of 80 to 130.

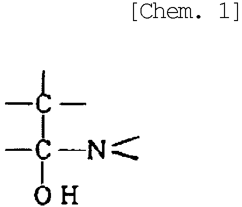

While the technique disclosed in Patent Document 1 can provide a rubber composition for large pneumatic tires for freeways having improved rolling resistance and high-speed durability without imparting wear resistance and cut resistance, accompanied by a recent increasing demand for low heat buildup, there has been a demand for a rubber composition for sidewalls which can provide a cross-linked rubber having reinforcing ability and tear resistance in a good balance and having further reduced heat buildup.

### RELATED ART DOCUMENTS

### PATENT DOCUMENTS

Patent Document 1: JP 62-096542 A

### SUMMARY OF THE INVENTION

### PROBLEM TO BE SOLVED BY THE INVENTION

An objective of the present invention is to provide a rubber composition for sidewalls which can provide a cross-linked rubber having remarkably reduced heat buildup and having reinforcing ability (specifically, a sufficiently high ratio of a stress at 300% stretch to a stress at 100% stretch (M300/M100)) and tear resistance in a good balance.

### MEANS FOR SOLVING PROBLEMS

As a result of intensive studies to achieve the above objective, the present inventors have found that the above objective can be achieved by a rubber composition for sidewalls comprising a solution-polymerized aromatic vinyl-conjugated diene copolymer and carbon, wherein the solution-polymerized aromatic vinyl-conjugated diene copolymer has a functional group capable of interacting with carbon, the content of an aromatic vinyl monomer unit is within a specific range, and the vinyl bond content of a conjugated diene monomer unit is within a specific range. This finding has led to the completion of the present invention.

Specifically, the present invention provides a rubber composition for sidewalls comprising a solution-polymerized aromatic vinyl-conjugated diene copolymer and carbon, wherein the solution-polymerized aromatic vinyl-conjugated diene copolymer has a functional group capable of interacting with carbon, the content of an aromatic vinyl monomer unit is 0.5 to 25% by weight in the total monomer units constituting the solution-polymerized aromatic vinyl-conjugated diene copolymer, and the vinyl bond content of a conjugated diene monomer unit in the solution-polymerized aromatic vinyl-conjugated diene copolymer is 0 to 50% by weight.

In the rubber composition for sidewalls according to the present invention, preferably, the solution-polymerized aromatic vinyl-conjugated diene copolymer has a glass transition temperature (Tg) of - 50°C or lower.

In the rubber composition for sidewalls according to the present invention, preferably, the carbon has a nitrogen adsorption specific surface area measured by the BET method of 85 m²/g or lower, an iodine adsorption of 90 mg/g or lower, and a dibutyl phthalate absorption of 140 cm³/100 g or lower.

Preferably, the rubber composition for sidewalls according to the present invention further comprises a rubber component other than the solution-polymerized aromatic vinyl-conjugated diene copolymer, wherein the amount of the solution-polymerized aromatic vinyl-conjugated diene copolymer present is 10 to 80% by weight in 100% by weight of the total rubber components.

Preferably, the rubber composition for sidewalls according to the present invention further comprises a natural rubber, the natural rubber being present in an amount of 10 to 80% by weight in 100% by weight of the total rubber components.

Preferably, the rubber composition for sidewalls according to the present invention further comprises a polybutadiene rubber, the polybutadiene rubber being present in an amount of 10 to 80% by weight in 100% by weight of the total rubber components.

Preferably, the rubber composition for sidewalls according to the present invention further comprises a resin, and more preferably, the amount of the resin is 0.1 to 5 parts by weight relative to 100 parts by weight of the rubber components including the solution-polymerized aromatic vinyl-conjugated diene copolymer.

In the rubber composition for sidewalls according to the present invention, preferably, the amount of the carbon is 10 to 200 parts by weight relative to 100 parts by weight of the rubber components including the solution-polymerized aromatic vinyl-conjugated diene copolymer.

In the rubber composition for sidewalls according to the present invention, preferably, the functional group capable of interacting with carbon is at least one selected from the group consisting of nitrogen atom-containing functional groups, tin atom-containing functional groups, and oxygen atom-containing functional groups.

Preferably, the rubber composition for sidewalls according to the present invention further comprises a cross-linking agent.

The present invention also provides a cross-linked rubber obtained by cross-linking the rubber composition for sidewalls.

Furthermore, the present invention provides a sidewall comprising the cross-linked rubber.

### EFFECTS OF INVENTION

The present invention provides a rubber composition for sidewalls which can provide a cross-linked rubber having remarkably reduced heat buildup and having reinforcing ability and tear resistance in a good balance. The present invention also provides a cross-linked rubber which is obtained using such a rubber composition for sidewalls, and has remarkably reduced heat buildup and has reinforcing ability and tear resistance in a good balance, and a sidewall.

### DESCRIPTION OF EMBODIMENTS

The rubber composition for sidewalls according to the present invention comprises a solution-polymerized aromatic vinyl-conjugated diene copolymer and carbon, wherein the solution-polymerized aromatic vinyl-conjugated diene copolymer has a functional group capable of interacting with carbon, the content of an aromatic vinyl monomer unit is 0.5 to 25% by weight, and the vinyl bond content of a conjugated diene monomer unit is 0 to 50% by weight. The rubber composition for sidewalls according to the present invention contains such a solution-polymerized aromatic vinyl-conjugated diene copolymer and carbon, and thus can provide a cross-linked rubber having remarkably reduced heat buildup and having reinforcing ability (specifically, a sufficiently high ratio of a stress at 300% stretch to a stress at 100% stretch (M300/M100)) and tear resistance in a good balance.

### <Solution-polymerized aromatic vinyl-conjugated diene copolymer>

The solution-polymerized aromatic vinyl-conjugated diene copolymer used in the present invention is a polymer having a functional group capable of interacting with carbon, in which the content of an aromatic vinyl monomer unit is 0.5 to 25% by weight in the total monomer units constituting the solution-polymerized aromatic vinyl-conjugated diene copolymer, and the vinyl bond content of a conjugated diene monomer unit in the solution-polymerized aromatic vinyl-conjugated diene copolymer is 0 to 50% by weight.

The solution-polymerized aromatic vinyl-conjugated diene copolymer used in the present invention contains a conjugated diene monomer unit and an aromatic vinyl monomer unit.

Examples of conjugated diene compounds for forming conjugated diene monomer units include, but are not particularly limited to, 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, 3-butyl-1,3-octadiene, and the like. Among these, preferred are 1,3-butadiene and isoprene, and 1,3-butadiene is more preferred. These conjugated diene compounds may be used alone or in combination of two or more. Particularly preferred is use of 1,3-butadiene alone as the conjugated diene compound.

The content of the conjugated diene monomer unit is preferably 75 to 99.5% by weight, more preferably 77 to 98% by weight, still more preferably 79 to 96.5% by weight, particularly preferably 81 to 95.5% by weight of the total monomer units constituting the solution-polymerized aromatic vinyl-conjugated diene copolymer used in the present invention. When the content of the conjugated diene monomer unit is controlled within the above ranges, a cross-linked rubber having low heat buildup, reinforcing ability, and tear resistance balanced at a higher level can be obtained.

Examples of aromatic vinyl compounds for forming aromatic vinyl monomer units include, but are not particularly limited to, styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, vinylnaphthalene, and the like. Among these, preferred is styrene. These aromatic vinyl compounds may be used alone or in combination of two or more. Particularly preferred is use of styrene alone as the aromatic vinyl compound.

The content of the aromatic vinyl monomer unit is 0.5 to 25% by weight in the total monomer units constituting the solution-polymerized aromatic vinyl-conjugated diene copolymer used in the present invention. An excessively large or small content of the aromatic vinyl monomer unit makes it difficult to provide a cross-linked rubber having reduced heat buildup and having reinforcing ability and tear resistance in a good balance. The content of the aromatic vinyl monomer unit can be at any value as long as it is within 0.5 to 25% by weight, and is not particularly limited. The content is preferably 2 to 23% by weight, more preferably 3.5 to 21% by weight, still more preferably 4.5 to 19% by weight. When the content of the aromatic vinyl monomer unit is controlled within the above ranges, a cross-linked rubber having low heat buildup, reinforcing ability, and tear resistance balanced at a higher level can be obtained.

The solution-polymerized aromatic vinyl-conjugated diene copolymer used in the present invention may contain an additional monomer unit other than the conjugated diene monomer unit and the aromatic vinyl monomer unit. Examples of additional monomers constituting such additional monomer units include straight-chain olefin compounds such as ethylene, propylene, and 1-butene; cyclic olefin compounds such as cyclopentene and 2-norbornene; non-conjugated diene compounds such as 1,5-hexadiene, 1,6-heptadiene, 1,7-octadiene, dicyclopentadiene, and 5-ethylidene-2-norbornene; and the like. The content of the additional monomer unit is preferably 10% by weight or less, more preferably 5% by weight or less, still more preferably 2% by weight or less, particularly preferably 1% by weight or less, most preferably 0.5% by weight or less in the total monomer units constituting the solution-polymerized aromatic vinyl-conjugated diene copolymer used in the present invention.

In the solution-polymerized aromatic vinyl-conjugated diene copolymer used in the present invention, the vinyl bond content of the conjugated diene monomer unit is 0 to 50% by weight. An excessively large or small vinyl bond content makes it difficult to provide a cross-linked rubber having reduced heat buildup and having reinforcing ability and tear resistance in a good balance. The vinyl bond content can be at any value as long as it is within 0 to 50% by weight, and is not particularly limited. The vinyl bond content is preferably 3 to 45% by weight, more preferably 6 to 40% by weight, still more preferably 10 to 35% by weight, particularly preferably 13 to 32% by weight. When the vinyl bond content is controlled within the above ranges, a cross-linked rubber having low heat buildup, reinforcing ability, and tear resistance balanced at a higher level can be obtained.

The solution-polymerized aromatic vinyl-conjugated diene copolymer used in the present invention has a functional group capable of interacting with carbon in the polymer. The functional group capable of interacting with carbon refers to a functional group capable of forming a covalent bond between the functional group and the surface of carbon or causing an intermolecular force weaker than the covalent bond (e.g., ion-dipole interaction, dipole-dipole interaction, hydrogen bond, or van der Waals force). Examples of such a functional group capable of interacting with carbon include, but are not particularly limited to, nitrogen atom-containing functional groups, tin atom-containing functional groups, oxygen atom-containing functional groups, and the like. Among these, nitrogen atom-containing functional groups and tin atom-containing functional groups are preferred because they have high interaction with carbon.

As the functional group capable of interacting with carbon, the solution-polymerized aromatic vinyl-conjugated diene copolymer used in the present invention may have a single functional group alone, or may have a plurality of functional groups. The solution-polymerized aromatic vinyl-conjugated diene copolymer preferably has a plurality of functional groups, and more preferably a nitrogen atom-containing functional group and a tin atom-containing functional group. Examples of embodiments in which the solution-polymerized aromatic vinyl-conjugated diene copolymer used in the present invention has a plurality of functional groups described above include an embodiment in which polymer chains of the solution-polymerized aromatic vinyl-conjugated diene copolymer have a plurality of functional groups, and an embodiment in which among polymer chains thereof, part of the polymer chains has a functional group, and other polymer chains have a different functional group. Among these, the latter embodiment is preferable, and an embodiment in which among the polymer chains, part of the polymer chains has a nitrogen atom-containing functional group, and other polymer chains have a different functional group is more preferred.

The functional group capable of interacting with carbon can be introduced into the solution-polymerized aromatic vinyl-conjugated diene copolymer used in the present invention by any method. For example, preferred is a method of polymerizing a monomer containing a conjugated diene compound and an aromatic vinyl compound in production of the solution-polymerized aromatic vinyl-conjugated diene copolymer, and reacting a modifier having a functional group capable of interacting with carbon with solution-polymerized aromatic vinyl-conjugated diene copolymer chains having active ends after the solution-polymerized aromatic vinyl-conjugated diene copolymer chains having active ends are obtained. Specifically, the solution-polymerized aromatic vinyl-conjugated diene copolymer used in the present invention preferably has a modifying group capable of interacting with carbon which is derived from the modifier having a functional group capable of interacting with carbon.

The weight average molecular weight (Mw) of the solution-polymerized aromatic vinyl-conjugated diene copolymer used in the present invention is a value determined as a polystyrene-equivalent value by gel permeation chromatography, and is preferably 100,000 to 3,000,000, more preferably 200,000 to 2,000,000, still more preferably 300,000 to 1,000,000, particularly preferably 350,000 to 800,000, most preferably 400,000 to 600,000. When the weight average molecular weight of the solution-polymerized aromatic vinyl-conjugated diene copolymer is controlled within the above ranges, carbon can be readily compounded with the solution-polymerized aromatic vinyl-conjugated diene copolymer, the processability of the rubber composition can be further enhanced, and further, a cross-linked rubber having low heat buildup, reinforcing ability, and tear resistance balanced at a higher level can be obtained.

The molecular weight distribution, which is represented by the ratio (Mw/Mn) of the weight average molecular weight (Mw) of the solution-polymerized aromatic vinyl-conjugated diene copolymer used in the present invention to the number average molecular weight (Mn) thereof, is preferably 1.1 to 3, more preferably 1.13 to 2.0, still more preferably 1.15 to 1.55. When the molecular weight distribution (Mw/Mn) of the solution-polymerized aromatic vinyl-conjugated diene copolymer is controlled within the above ranges, a cross-linked rubber having low heat buildup, reinforcing ability, and tear resistance balanced at a higher level can be obtained.

The glass transition temperature (Tg) of the solution-polymerized aromatic vinyl-conjugated diene copolymer used in the present invention is preferably -20°C or lower, more preferably -40°C or lower, still more preferably -50°C or lower, particularly preferably - 58°C or lower, although not particularly limited thereto. The lower limit of the glass transition temperature (Tg) is preferably -100°C or higher, more preferably -90°C or higher, although not particularly limited thereto. When the glass transition temperature (Tg) of the solution-polymerized aromatic vinyl-conjugated diene copolymer is controlled within the above ranges, a cross-linked rubber having low heat buildup, reinforcing ability, and tear resistance balanced at a higher level can be obtained. Examples of methods of controlling the glass transition temperature (Tg) of the solution-polymerized aromatic vinyl-conjugated diene copolymer within the above ranges include, but are not particularly limited to, a method of controlling the content of the aromatic vinyl monomer unit in the total monomer units constituting the solution-polymerized aromatic vinyl-conjugated diene copolymer, a method of controlling the vinyl bond content in the conjugated diene monomer unit, and the like.

The solution-polymerized aromatic vinyl-conjugated diene copolymer used in the present invention has a Mooney viscosity (ML1+4, 100°C) of preferably 20 to 100, more preferably 30 to 80, still more preferably 40 to 60, particularly preferably 45 to 54. Note that when the solution-polymerized aromatic vinyl-conjugated diene copolymer is obtained as an oil extended rubber, preferably, the Mooney viscosity of the oil extended rubber is controlled within the above ranges. When the Mooney viscosity (ML1+4, 100°C) of the solution-polymerized aromatic vinyl-conjugated diene copolymer is controlled within the above ranges, carbon can be readily compounded with the solution-polymerized aromatic vinyl-conjugated diene copolymer, the processability of the rubber composition can be further enhanced, and further, a cross-linked rubber having low heat buildup, reinforcing ability, and tear resistance balanced at a higher level can be obtained.

### <Method for producing solution-polymerized aromatic vinyl-conjugated diene copolymer>

The solution-polymerized aromatic vinyl-conjugated diene copolymer used in the present invention can be produced by any method as long as the method uses solution polymerization. Suitable is a method for producing the solution-polymerized aromatic vinyl-conjugated diene copolymer, comprising a polymerization step of polymerizing a monomer containing a conjugated diene compound and an aromatic vinyl compound in an inert solvent in the presence of a polymerization initiator to yield a solution-polymerized aromatic vinyl-conjugated diene copolymer chain having an active end; and a modification step of reacting the solution-polymerized aromatic vinyl-conjugated diene copolymer chain having an active end obtained in the polymerization step with a modifier having a functional group capable of interacting with carbon.

### <Polymerization step>

The conjugated diene compound and the aromatic vinyl compound included in the monomer used in the polymerization step can be any of the monomers listed above, and the amounts thereof used can be selected according to the monomer composition of a solution-polymerized aromatic vinyl-conjugated diene copolymer to be obtained. In the case where a solution-polymerized aromatic vinyl-conjugated diene copolymer containing an additional monomer unit other than the conjugated diene monomer unit and the aromatic vinyl monomer unit is prepared, the monomers used in the polymerization step can include any of the additional monomers for forming additional monomer units described above.

The inert solvent used in polymerization may be one generally used in solution polymerization, and is not particularly limited as long as it does not inhibit the polymerization reaction. Specific examples of such inert solvents include chain aliphatic hydrocarbons such as butane, pentane, hexane, and heptane; alicyclic hydrocarbons such as cyclopentane and cyclohexane; aromatic hydrocarbons such as benzene, toluene, xylene, and ethylbenzene; ether compounds such as tetrahydrofuran and diethyl ether; and the like. These inert solvents may be used alone or in combination of two or more. Although not particularly limited, the amount of the inert solvent used is selected to provide a monomer concentration of, for example, 1 to 50% by weight, preferably 10 to 40% by weight.

The polymerization initiator used in polymerization is not particularly limited as long as monomers including the conjugated diene compound and the aromatic vinyl compound are polymerized to yield a solution-polymerized aromatic vinyl-conjugated diene copolymer chain having an active end. Specific examples thereof include organic alkali metal compounds, organic alkaline earth metal compounds, and polymerization initiators having a lanthanide-series metal compound or the like as a primary catalyst. Examples of organic alkali metal compounds include organic monolithium compounds such as n-butyllithium, sec-butyllithium, t-butyllithium, hexyllithium, phenyllithium, and stilbenelithium; organic polyvalent lithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; and the like. Examples of organic alkaline earth metal compounds include di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, diethylaminobarium, barium distearate, diketylbarium, and the like. Examples of polymerization initiators containing a lanthanide-series metal compound as a primary catalyst include polymerization initiators containing a lanthanide-series metal salt of a lanthanide-series metal, such as lanthanum, cerium, praseodymium, neodymium, samarium, or gadolinium, and a carboxylic acid, a phosphorus-containing organic acid, or the like as a primary catalyst, and a promoter such as an alkylaluminum compound, an organoaluminum hydride compound, or an organoaluminum halide compound. Among these polymerization initiators, organic monolithium compounds and organic poly-lithium compounds are preferably used, organic monolithium compounds are more preferably used, and n-butyllithium is particularly preferably used.

The organic alkali metal compounds may be reacted in advance with a secondary amine compound such as dibutylamine, dihexylamine, dibenzylamine, pyrrolidine, piperidine, hexamethyleneimine, or heptamethyleneimine, and used as organic alkali metal amide compounds. When an organic alkali metal amide compound is used as a polymerization initiator, the amine structure derived from the organic alkali metal amide compound can be introduced into one end of the solution-polymerized aromatic vinyl-conjugated diene copolymer chain, and a cross-linked rubber having low heat buildup, reinforcing ability, and tear resistance balanced at a higher level can be obtained. These polymerization initiators may be used alone or in combination of two or more.

The amount of the polymerization initiator used can be selected according to the molecular weight of a desired solution-polymerized aromatic vinyl-conjugated diene copolymer chain, and is in the range of typically 1 to 50 mmol, preferably 1.5 to 20 mmol, more preferably 2 to 15 mmol per 1000 g of monomers.

The polymerization temperature is in the range of typically - 80 to +150°C, preferably 0 to 100°C, more preferably 30 to 90°C. Although the polymerization mode may be any mode such as batch or continuous, a batch mode is preferable in order to ensure easy control of the randomness of conjugated diene monomer units and aromatic vinyl monomer units bonded.

In the present invention, the proportion of aromatic vinyl compound blocks in the solution-polymerized aromatic vinyl-conjugated diene copolymer is preferably 10.0% or less, more preferably 5.0% or less, still more preferably 3.0% or less, particularly preferably 2.0% or less. The proportion of aromatic vinyl compound blocks is determined by ¹H-NMR using deuterochloroform as a solvent. A ¹H-NMR spectrum is obtained, where peaks in the range of 6.1 to 7.7 ppm are regarded as derived from the aromatic vinyl compound and peaks in the range of 6.1 to 6.88 ppm therein are regarded as derived from aromatic vinyl compound blocks. The ratio of the peak area of aromatic vinyl compound blocks to the peak area of the aromatic vinyl compound is determined, and the value is multiplied by 2.5 and converted to a percentage as a proportion of aromatic vinyl compound blocks. In the case where the aromatic vinyl compound is styrene, it is preferable that the proportion of styrene blocks fall within the above ranges. When the proportion of aromatic vinyl compound blocks is controlled within above ranges, a cross-linked rubber having low heat buildup, reinforcing ability, and tear resistance balanced at a higher level can be obtained. The proportion of aromatic vinyl compound blocks can be controlled in the process of polymerizing the monomers including the conjugated diene compound and the aromatic vinyl compound by a method such as selecting the proportional amounts of the monomers used at the start of polymerization, selecting factors in additional addition of the monomers such as the proportional amount of the aromatic vinyl compound in the monomers additionally added and the timing of additional addition, adjusting the amount of the inert solvent relative to the amount of the aromatic vinyl compound used, selecting the type, the amount, or the like of a polar compound, or selecting the polymerization temperature, or a combination of any of these methods.

In the polymerization step, the polymerization of the monomers including the conjugated diene compound and the aromatic vinyl compound is preferably performed in the presence of a polar compound. Specifically, a polar compound is used in an amount of preferably 0.01 to 1.2 mol, more preferably 0.1 to 1.1 mol, still more preferably 0.1 to 1.0 mol per mol of the polymerization initiator. Such use of a polar compound in the polymerization enables suitable control of the vinyl bond content of conjugated diene monomer units included in the solution-polymerized aromatic vinyl-conjugated diene copolymer chain formed in the polymerization step within the above ranges.

The polymerization in the presence of a polar compound may be performed by any method without limitation, and examples thereof include methods such as performing polymerization in an inert solvent for polymerization containing the polar compound. Specific examples of the polar compound include ether compounds such as dibutylether, tetrahydrofuran, and 2,2-di(tetrahydrofuryl)propane; tertiary amines such as tetramethylethylenediamine; alkali metal alkoxides; phosphine compounds; and the like. Among these, preferred are ether compounds and tertiary amines, more preferred are tertiary amines, and particularly preferred is tetramethylethylenediamine. These polar compounds may be used alone or in combination of two or more.

In the present invention, to increase compatibility between the solution-polymerized aromatic vinyl-conjugated diene copolymer and carbon and thus obtain a cross-linked rubber having low heat buildup, reinforcing ability, and tear resistance balanced at a higher level, the polymerization step may be as follows.

Specifically, the polymerization step preferably includes a step of polymerizing monomers including isoprene or isoprene and an aromatic vinyl compound in an inert solvent using a polymerization initiator to form a polymer block (A) having an active end containing 80 to 100% by weight of isoprene monomer units and 0 to 20% by weight of aromatic vinyl monomer units; and combining the polymer block (A) having an active end with monomers including 1,3-butadiene and an aromatic vinyl compound and continuing the polymerization reaction to form a polymer block (B) including 1,3-butadiene monomer units and aromatic vinyl monomer units and the polymer block (A) which are serially linked to each other, thereby providing a solution-polymerized aromatic vinyl-conjugated diene copolymer chain having an active end.

When such steps are employed, the polymerization step results in solution-polymerized aromatic vinyl-conjugated diene copolymer chains having an active end including chains in which a polymer block (A) including 80 to 100% by weight of isoprene monomer units and 0 to 20% by weight of aromatic vinyl monomer units and a polymer block (B) including 1,3-butadiene monomer units and aromatic vinyl monomer units are formed to be serially linked to each other. The following description illustrates such an embodiment.

### [Polymer block (A)]

According to one embodiment of the present invention, although it is sufficient that the polymer block (A) in the solution-polymerized aromatic vinyl-conjugated diene copolymer chain contains 80 to 100% by weight of isoprene monomer units and 0 to 20% by weight of aromatic vinyl monomer units, the polymer block (A) contains preferably 85 to 97% by weight of isoprene monomer units and 3 to 15% by weight of aromatic vinyl monomer units, more preferably 89 to 95% by weight of isoprene monomer units and 5 to 11% by weight of aromatic vinyl monomer units. When the contents of isoprene monomer units and aromatic vinyl monomer units are controlled within the above ranges, the compatibility between the solution-polymerized aromatic vinyl-conjugated diene copolymer and carbon is further enhanced, and a cross-linked rubber having low heat buildup, reinforcing ability, and tear resistance balanced at a higher level can be obtained.

Examples of aromatic vinyl compounds which can be used to form aromatic vinyl monomer units in the polymer block (A) are the same aromatic viny compounds listed above. Among these, preferred is styrene. These aromatic vinyl compounds may be used alone or in combination of two or more.

Although the polymer block (A) preferably consists only of isoprene monomer units or isoprene monomer units and aromatic vinyl monomer units, additional monomer units may be present as needed in addition to isoprene monomer units or isoprene monomer units and aromatic vinyl monomer units. Examples of additional compounds which can be used to form such additional monomer units include conjugated diene compounds other than isoprene, such as 1,3-butadiene, 2,3-dimethyl-1,3-butadiene, 2-chloro-1,3-butadiene, 1,3-pentadiene, and 1,3-hexadiene; α,β-unsaturated nitriles such as acrylonitrile and methacrylonitrile; unsaturated carboxylic acids or acid anhydrides such as acrylic acid, methacrylic acid, and maleic anhydride; unsaturated carboxylic acid esters such as methyl methacrylate, ethyl acrylate, and butyl acrylate; non-conjugated dienes such as 1,5-hexadiene, 1,6-heptadiene, 1,7-octadiene, dicyclopentadiene, and 5-ethylidene-2-norbornene; and the like. Among these, 1,3-butadiene is preferred. These additional monomers may be used alone or in combination of two or more. The content of additional monomer units in the polymer block (A) is preferably 20% by weight or less, more preferably 10% by weight or less, still more preferably 6% by weight or less.

In the present invention, the polymer block (A) in the solution-polymerized aromatic vinyl-conjugated diene copolymer chain is formed by polymerizing the monomers including isoprene or isoprene and the aromatic vinyl compound using a polymerization initiator in an inert solvent. The polymer block (A) formed has an active end.

Examples of inert solvents which can be used in polymerization of the monomers including isoprene or isoprene and the aromatic vinyl compound to form the polymer block (A) are the same inert solvents listed above. The amount of the inert solvent used is selected to provide a monomer concentration of preferably 1 to 80% by weight, more preferably 10 to 50% by weight.

Any polymerization initiator can be used without limitation to form the polymer block (A) as long as the monomers including isoprene or isoprene and the aromatic vinyl compound are polymerized to provide a polymer chain having an active end. Specific examples thereof are the same polymerization initiators listed above.

The amount of the polymerization initiator used can be selected according to the desired molecular weight, and is preferably 4 to 250 mmol, more preferably 6 to 200 mmol, particularly preferably 10 to 70 mmol per 100 g of the monomers including isoprene or isoprene and the aromatic vinyl compound.

The polymerization temperature in polymerization of the monomers including isoprene or isoprene and the aromatic vinyl compound is preferably -80 to +150°C, more preferably 0 to 100°C, still more preferably 20 to 90°C. The polymerization mode may be any mode such as batch or continuous. The bonding form may be any of various bonding forms such as block, tapered, and random forms.

The polymer block (A) is preferably formed by polymerizing the monomers including isoprene or isoprene and the aromatic vinyl compound in the presence of a polar compound. Specifically, a polar compound is used in an amount of preferably 0.01 to 100 mol, more preferably 0.03 to 30 mol, still more preferably 0.05 to 1 mol per mol of the polymerization initiator. Such use of a polar compound in the polymerization enables suitable control of the vinyl bond content of isoprene monomer units in the polymer block (A). The vinyl bonds in isoprene monomer units may be either in the 1,2-vinyl form or in the 3,4-vinyl form.

Examples of methods for polymerizing the monomers including isoprene or isoprene and the aromatic vinyl compound in the presence of a polar compound include, but are not particularly limited to, methods such as performing polymerization in an inert solvent for polymerization containing the polar compound. Examples of usable polar compounds are the same polar compounds listed above.

The weight average molecular weight (Mw) of the polymer block (A) is preferably 500 to 15,000, more preferably 1,000 to 12,000, particularly preferably 1,500 to 10,000 when determined as a polystyrene-equivalent value by gel permeation chromatography. When the weight average molecular weight of the polymer block (A) is controlled within the above ranges, a cross-linked rubber having low heat buildup, reinforcing ability, and tear resistance balanced at a higher level can be obtained.

The molecular weight distribution, which is represented by the ratio (Mw/Mn) of the weight average molecular weight (Mw) to the number average molecular weight (Mn), of the polymer block (A) is preferably 1.0 to 1.5, more preferably 1.0 to 1.3. Control of the molecular weight distribution value (Mw/Mn) of the polymer block (A) within the above ranges facilitates production of the solution-polymerized aromatic vinyl-conjugated diene copolymer.

### [Polymer block (B)]

According to one embodiment of the present invention, although it is sufficient that the solution-polymerized aromatic vinyl-conjugated diene copolymer chain in the polymer block (B) contains 1,3-butadiene monomer units and aromatic vinyl monomer units, the polymer block (B) contains preferably 45 to 98% by weight of 1,3-butadiene monomer units and 2 to 55% by weight of aromatic vinyl monomer units, more preferably 60 to 97% by weight of 1,3-butadiene monomer units and 3 to 40% by weight of aromatic vinyl monomer units. When the contents of 1,3-butadiene monomer units and aromatic vinyl monomer units are controlled within the above ranges, a cross-linked rubber having low heat buildup, reinforcing ability, and tear resistance balanced at a higher level can be obtained.

Examples of aromatic vinyl compounds which can be used to form aromatic vinyl monomer units in the polymer block (B) are the same aromatic vinyl compounds listed above. Among these, preferred is styrene.

Although the polymer block (B) preferably consists only of 1,3-butadiene monomer units and aromatic vinyl monomer units, additional monomer units may be present as needed in addition to 1,3-butadiene monomer units and aromatic vinyl monomer units as long as the essential features of the present invention are not impaired. Examples of additional monomers which can be used to form such additional monomer units are the same compounds listed above for the polymer block (A) (except 1,3-butadiene). Isoprene may be used as such an additional monomer. The content of additional monomer units in the polymer block (B) is preferably 10% by weight or less, more preferably 5% by weight or less.

In one embodiment of the present invention, in the solution-polymerized aromatic vinyl-conjugated diene copolymer chain, the polymer block (B) and the polymer block (A) are formed to be serially linked to each other by mixing the above-mentioned polymer block (A) having an active end with monomers including 1,3-butadiene and the aromatic vinyl compound, and continuing the polymerization reaction. The resulting polymer block (B) has an active end. On the other hand, the polymer block (A) loses the active end.

In the polymerization of the polymer block (A) and the monomers including 1,3-butadiene and the aromatic vinyl compound to form the polymer block (B), any inert solvent may be used without limitation, and any of the same inert solvents listed above can be used.

The amount of the polymer block (A) having an active end used in formation of the polymer block (B) may be selected according to the desired molecular weight, and is in the range of preferably 0.1 to 5 mmol, more preferably 0.15 to 2 mmol, still more preferably 0.2 to 1.5 mmol per 100 g of the monomers including 1,3-butadiene and the aromatic vinyl compound.

The polymer block (A) and the monomers including 1,3-butadiene and the aromatic vinyl compound may be mixed by any method without limitation. The polymer block (A) having an active end may be added to a solution of the monomers including 1,3-butadiene and the aromatic vinyl compound, or the monomers including 1,3-butadiene and the aromatic vinyl compound may be added to a solution of the polymer block (A) having an active end. From the viewpoint of control of polymerization, a preferred method is adding the polymer block (A) having an active end to a solution of the monomers including 1,3-butadiene and the aromatic vinyl compound.

The polymerization temperature in polymerization of the monomers including 1,3-butadiene and the aromatic vinyl compound is preferably -80 to +150°C, more preferably 0 to 100°C, still more preferably 20 to 90°C. Although the polymerization mode may be any mode such as batch or continuous, a batch mode is preferable in order to ensure easy control of the randomness of bonding.

The form of monomers bonded in the polymer block (B) may be any of various bonding forms such as block, tapered, and random forms. Among these, preferred is a random form. In the case of a random form, a cross-linked rubber having low heat buildup, reinforcing ability, and tear resistance balanced at a higher level can be obtained. In order to randomly bond 1,3-butadiene and the aromatic vinyl compound, 1,3-butadiene or 1,3-butadiene and the aromatic vinyl compound is/are preferably fed continuously or intermittently to the polymerization system during polymerization such that the ratio of the aromatic vinyl compound to the total of 1,3-butadiene and the aromatic vinyl compound in the polymerization system does not increase too high.

In one embodiment of the present invention, the polymer block (B) is preferably formed in the same manner as the polymer block (A) by polymerizing the monomers including 1,3-butadiene and the aromatic vinyl compound in the presence of a polar compound. Specifically, a polar compound is used in an amount of preferably 0.01 to 0.50 mol, more preferably 0.05 to 0.40 mol, still more preferably 0.08 to 0.35 mol per mol of the polymerization initiator. Such use of a polar compound in the polymerization enables suitable control of the vinyl bond content of 1,3-butadiene monomer units in the polymer block (B). As a result, the vinyl bond content of conjugated diene monomer units in the solution-polymerized aromatic vinyl-conjugated diene copolymer finally obtained can be suitably controlled within the above ranges.

The polymerization of the monomers including 1,3-butadiene and the aromatic vinyl compound in the presence of a polar compound may be performed by any method without limitation. Examples thereof include methods such as performing polymerization in an inert solution containing the poler compound. In this method, the polar compound is added such that the total of the amount of the polar compound added to form the polymer block (A) and the amount of the polar compound additionally added falls within the ranges described above. For this reason, when the polymer block (A) is formed in the presence of an amount of the polar compound sufficient to control the vinyl bond content of 1,3-butadiene monomer units in the polymer block (B), further addition of the polar compound is not needed. The polar compound may be any of the same polar compounds listed above.

Thus, a solution-polymerized aromatic vinyl-conjugated diene copolymer chain containing the polymer block (A) and the polymer block (B) and having an active end can be obtained. In one embodiment of the present invention, although from the viewpoint of productivity, it is preferable that the solution-polymerized aromatic vinyl-conjugated diene copolymer chain having an active end consist of a polymer block (A)-polymer block (B) chain and the polymer block (B) have an active end, two or more polymer blocks (A) may be present, and an additional polymer block may be present. Examples of such solution-polymerized aromatic vinyl-conjugated diene copolymer chains having an active end include polymer block (A)-polymer block (B)-polymer block (A), and the like. In this case, an active end is formed at the end of the polymer block (A) formed after the polymer block (B). In the case where the polymer block (A) is formed on the active end side of the solution-polymerized aromatic vinyl-conjugated diene copolymer chain, the amount of isoprene used is preferably 10 to 100 mol, more preferably 15 to 70 mol, particularly preferably 20 to 35 mol per mol of the polymerization initiator used in the first polymerization reaction (polymerization reaction to form the first polymer block (A)).

The weight ratio of the polymer block (A) to the polymer block (B) (weight of polymer block (A) /weight of polymer block (B)) of the solution-polymerized aromatic vinyl-conjugated diene copolymer chain having an active end obtained in one embodiment of the present invention (in the case where multiple polymer blocks (A) and multiple polymer blocks (B) are present, the weight ratio based on the total weights thereof) is preferably 0.001 to 0.2, more preferably 0.005 to 0.1, particularly preferably 0.01 to 0.05. When the weight ratio of the polymer block (A) and the polymer block (B) is controlled within the above ranges, a cross-linked rubber having low heat buildup, reinforcing ability, and tear resistance balanced at a higher level can be obtained.

### <Modification step>

Next, in the modification step, the solution-polymerized aromatic vinyl-conjugated diene copolymer chain having an active end obtained in the polymerization step described above is reacted with a modifier having a functional group capable of interacting with carbon.

The modifier having a functional group capable of interacting with carbon used in the modification step is not particularly limited, and can be any compound which is reactive with the solution-polymerized aromatic vinyl-conjugated diene copolymer chain having an active end obtained in the above-mentioned polymerization step and has a functional group capable of interacting with carbon. Examples of the modifier having a functional group capable of interacting with carbon include, but are not particularly limited to, modifiers having a nitrogen atom-containing functional group, a tin atom-containing functional group, or an oxygen atom-containing functional group as the functional group capable of interacting with carbon, and the like. Among these, a modifier having a tin atom-containing functional group or a nitrogen atom-containing functional group is preferred because such a modifier has high interaction with carbon, and as a result, a cross-linked rubber having low heat buildup, reinforcing ability, and tear resistance balanced at a higher level can be obtained. These modifiers having a functional group capable of interacting with carbon can be used alone or in combination of two or more. The modifier having a functional group capable of interacting with carbon may have coupling action.

Examples of modifiers having a nitrogen atom-containing functional group as the functional group capable of interacting with carbon include amide compounds, compounds having a protected primary amino group and an alkoxysilyl group, polyfunctional compounds having two or more epoxy groups and one or more nitrogen-containing groups in the molecule, compound having a silyl group with two or more alkoxy substituent groups and having one or more nitrogen atoms, and compounds represented by General Formula (9), which are described later.

Examples of modifiers having a tin atom-containing functional group as the functional group capable of interacting with carbon include halogenated tin compounds such as tin tetrachloride, tin tetrabromide, triphenyltin chloride, tributyltin chloride, dioctyltin dichloride, triisopropyltin chloride, diphenyltin chloride, dibutyltin dichloride, phenyltin trichloride, and butyltin trichloride. Among these, tin tetrachloride and dioctyltin dichloride are preferred, and tin tetrachloride is more preferred. In the halogenated tin compounds, usually, the tin atom acts as the functional group capable of interacting with carbon.

Examples of modifiers having an oxygen atom-containing functional group as the functional group capable of interacting with carbon include siloxane compounds, amide compounds, compounds having a protected primary amino group and an alkoxysilyl group, polyfunctional compounds having two or more epoxy groups and one or more nitrogen-containing groups in the molecule, compounds having a silyl group with two or more alkoxy substituent groups and having one or more nitrogen atoms, reactive polysiloxane compounds represented by General Formula (8), and compounds represented by General Formula (9) where in General Formula (9), A¹ represents -OR³⁰ (where R³⁰ represents a hydrogen atom or a hydrocarbyl group), which are described later.

Examples of modifiers having an organic group containing an oxygen atom and a nitrogen atom as the functional group capable of interacting with carbon include amide compounds, compounds having a protected primary amino group and an alkoxysilyl group, polyfunctional compounds having two or more epoxy groups and one or more nitrogen-containing groups in the molecule, compounds having a silyl group with two or more alkoxy substituent groups and having one or more nitrogen atoms, and compounds represented by General Formula (9) where in General Formula (9), A¹ represents -OR³⁰ (where R³⁰ is a hydrogen atom or a hydrocarbyl group), which are described later.

### [Siloxane compound]

Examples of modifiers having a functional group capable of interacting with carbon include siloxane compounds. Such siloxane compounds may be any compounds without limitation as long as they have a structure represented by (-Si-O-Si-). Preferred are organosiloxanes having an organic group in addition to the structure represented by (-Si-O-Si-), and more preferred are polyorganosiloxanes represented by General Formula (1) below.

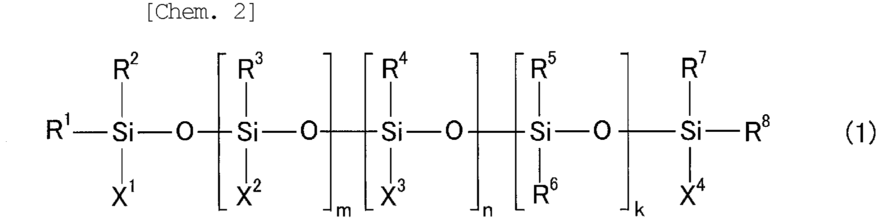

In General Formula (1), R¹ to R⁸ are alkyl groups having 1 to 6 carbon atoms or aryl groups having 6 to 12 carbon atoms, which may be the same or different from each other. X¹ and X⁴ are any groups selected from the group consisting of alkyl groups having 1 to 6 carbon atoms, aryl groups having 6 to 12 carbon atoms, alkoxy groups having 1 to 5 carbon atoms, and epoxy group-containing groups having 4 to 12 carbon atoms, which may be the same or different from each other. X² is an alkoxy group having 1 to 5 carbon atoms or a group having 4 to 12 carbon atoms containing an epoxy group, and if multiple X²s are present, they may be the same or different from each other. X³ is a group containing 2 to 20 repeating units of an alkylene glycol, and if multiple X³s are present, they may be the same or different from each other. "m" is an integer of 1 to 200, "n" is an integer of 0 to 200, "k" is an integer of 0 to 200, and "m+n+k" is 1 or more.

For the polyorganosiloxanes represented by General Formula (1), examples of alkyl groups having 1 to 6 carbon atoms which may form R¹ to R⁸, X¹, and X⁴ in General Formula (1) include a methyl group, an ethyl group, an n-propyl group, an isopropyl group, a butyl group, a pentyl group, a hexyl group, a cyclohexyl group, and the like. Examples of aryl groups having 6 to 12 carbon atoms include a phenyl group, a methylphenyl group, and the like. Among these, a methyl group and an ethyl group are preferred because of ease of production of these polyorganosiloxanes themselves.

For the polyorganosiloxanes represented by General Formula (1), examples of alkoxy groups having 1 to 5 carbon atoms which may form X¹, X², and X⁴ include a methoxy group, an ethoxy group, a propoxy group, an isopropoxy group, a butoxy group, and the like. Among these, a methoxy group and an ethoxy group are preferred because of ease of production of these polyorganosiloxanes themselves.

Furthermore, for the polyorganosiloxanes represented by General Formula (1), examples of epoxy group-containing groups having 4 to 12 carbon atoms which may form X¹, X², and X⁴ include groups represented by General Formula (2):

-Z³-Z⁴-E² (2)

In General Formula (2), Z³ is an alkylene or alkylarylene group having 1 to 10 carbon atoms, Z⁴ is a methylene group, a sulfur atom, or an oxygen atom, and E² is an epoxy group-containing hydrocarbon group having 2 to 10 carbon atoms.

Preferred groups represented by General Formula (2) are those wherein Z⁴ is an oxygen atom, more preferred groups are those wherein Z⁴ is an oxygen atom and E² is a glycidyl group, and particularly preferred groups are those wherein Z³ is an alkylene group having 1 to 3 carbon atoms, Z⁴ is an oxygen atom, and E² is a glycidyl group.

In the polyorganosiloxanes represented by General Formula (1), X¹ and X⁴ are each preferably an epoxy group-containing group having 4 to 12 carbon atoms or an alkyl group having 1 to 6 carbon atoms among those listed above. X² is preferably an epoxy group-containing group having 4 to 12 carbon atoms among those listed above. More preferably, X¹ and X⁴ are each an alkyl group having 1 to 6 carbon atoms and X² is an epoxy group-containing group having 4 to 12 carbon atoms.

In the polyorganosiloxanes represented by General Formula (1), preferred groups for X³, that is, preferred groups containing 2 to 20 repeating units of an alkylene glycol are groups represented by General Formula (3) below.

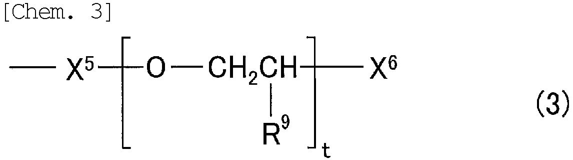

In General Formula (3), "t" is an integer of 2 to 20, X⁵ is an alkylene or alkylarylene group having 2 to 10 carbon atoms, R⁹ is a hydrogen atom or a methyl group, and X⁶ is an alkoxy or aryloxy group having 1 to 10 carbon atoms. Among these, preferred are those wherein "t" is an integer of 2 to 8, X⁵ is an alkylene group having 3 carbon atoms, R⁹ is a hydrogen atom, and X⁶ is a methoxy group.

In the polyorganosiloxanes represented by General Formula (1), "m" is an integer of 1 to 200, preferably an integer of 20 to 150, more preferably an integer of 30 to 120. Those wherein "m" is 1 or more increase the coupling ratio of the resulting solution-polymerized aromatic vinyl-conjugated diene copolymer. As a result, a cross-linked rubber having low heat buildup, reinforcing ability, and tear resistance balanced at a higher level can be obtained. Moreover, when "m" is 200 or less, such polyorganosiloxanes represented by General Formula (1) themselves can be easily produced, and are also easier to handle because their viscosity is not too high.

In the polyorganosiloxanes represented by General Formula (1), "n" is an integer of 0 to 200, preferably an integer of 0 to 150, more preferably an integer of 0 to 120, and "k" is an integer of 0 to 200, preferably an integer of 0 to 150, more preferably an integer of 0 to 130. The total number of "m", "n", and "k" is 1 or more, preferably 3 to 400, more preferably 20 to 300, particularly preferably 30 to 250. When the total number of "m", "n", and "k" is 1 or more, the reaction of such a polyorganosiloxane represented by General Formula (1) and the solution-polymerized aromatic vinyl-conjugated diene copolymer chain having an active end easily proceeds, and when the total number of "m", "n", and "k" is 400 or less, such polyorganosiloxanes represented by General Formula (1) themselves can be easily produced, and are also easier to handle because their viscosity is not too high.

The amount of the siloxane compound used in the modification step is preferably 0.1 mol or more, more preferably 0.2 mol or more, still more preferably 0.5 mol or more, particularly preferably 1.0 mol or more, more preferably 1.1 mol or more based on the number of (-Si-O-) repeating units in the siloxane compound per mol of the polymerization initiator used in the polymerization in the polymerization step described above. Moreover, the amount is preferably 10 mol or less, more preferably 5 mol or less, still more preferably 2.5 mol or less, particularly preferably 2 mol or less. When the amount of the siloxane compound used is within the above ranges, a cross-linked rubber having low heat buildup, reinforcing ability, and tear resistance balanced at a higher level can be obtained.

Especially, the amount of the siloxane compound used is particularly preferably 1 mol or more based on the number of (-Si-O-) repeating units per mol of the polymerization initiator because such an amount enables the active end of the solution-polymerized aromatic vinyl-conjugated diene copolymer chain having an active end obtained in the polymerization step to almost completely react with the siloxane compound. Specifically, an alkyl metal group, that is, a group represented by -R⁻M⁺ (wherein R is a hydrocarbon group forming the polymer chain end, and M is an alkali metal atom, an alkaline earth metal atom, or a lanthanide-series metal atom) as the active end of the solution-polymerized aromatic vinyl-conjugated diene copolymer chain having an active end obtained in the polymerization step can be almost completely consumed.

Although the timing of adding the siloxane compound to the solution containing the solution-polymerized aromatic vinyl-conjugated diene copolymer chain having an active end is not particularly limited, it is preferable to add the siloxane compound to the solution when the polymerization reaction is not completed and the monomers are also present in the solution containing the solution-polymerized aromatic vinyl-conjugated diene copolymer chain having an active end, more specifically when the monomers are present in an amount of 100 ppm or more, more preferably 300 to 50,000 ppm in the solution containing the solution-polymerized aromatic vinyl-conjugated diene copolymer chain having an active end. Such addition of the siloxane compound suppresses secondary reactions between the solution-polymerized aromatic vinyl-conjugated diene copolymer chain having an active end and impurities and the like in the polymerization system, and enables successful control of the reaction.

### [Amide compounds]

In the present invention, amide compounds can be used as the modifier having a functional group capable of interacting with carbon. Examples of such amide compounds include N-substituted cyclic amides such as N-methyl-2-pyrrolidone, N-vinyl-2-pyrrolidone, N-phenyl-2-pyrrolidone, and N-methyl-ε-caprolactam; N-substituted cyclic ureas such as 1,3-dimethylethyleneurea and 1,3-diethyl-2-imidazolidinone; N-substituted aminoketones such as 4,4'-bis(dimethylamino)benzophenone and 4,4'-bis(diethylamino)benzophenone; aromatic isocyanates such as diphenylmethane diisocyanate and 2,4-tolylene diisocyanate; N,N-disubstituted aminoalkylmethacrylamides such as N,N-dimethylaminopropylmethacrylamide; N-substituted aminoaldehydes such as 4-N,N-dimethylaminobenzaldehyde; N-substituted carbodiimides such as dicyclohexylcarbodiimide; Schiff bases such as N-ethylethylideneimine and N-methylbenzylideneimine; pyridyl group-containing vinyl compounds such as 4-vinylpyridine; and the like. Among these, N-substituted cyclic amides are preferred, and N-phenyl-2-pyrrolidone and N-methyl-2-pyrrolidone are more preferred.

### [Compound having protected primary amino group and alkoxysilyl group]

In the present invention, compounds having a protected primary amino group and an alkoxysilyl group can be used as the modifier having a functional group capable of interacting with carbon. Examples thereof include N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, N,N-bis(trimethylsilyl)aminoethylmethyldiethoxysilane, and the like. Among these, N,N-bis(trimethylsilyl)aminopropylmethyldimethoxysilane is preferred.

### [Polyfunctional compounds having two or more epoxy groups and one or more nitrogen-containing groups in molecule]

In the present invention, polyfunctional compounds having two or more epoxy groups and one or more nitrogen-containing groups in the molecule can be used as the modifier having a functional group capable of interacting with carbon. More preferably, a polyfunctional compound represented by General Formula (4) below can be used.

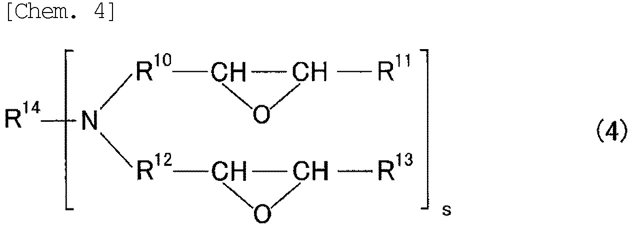

In General Formula (4), R¹⁰ and R¹¹ are each a hydrocarbon group having 1 to 10 carbon atoms or a hydrocarbon group having 1 to 10 carbon atoms and having an ether structure and/or a tertiary amine, R¹² and R¹³ are each hydrogen, a hydrocarbon group having 1 to 20 carbon atoms, or a hydrocarbon group having 1 to 20 carbon atoms and having an ether and/or a tertiary amine, R¹⁴ is a hydrocarbon group having 1 to 20 carbon atoms or a hydrocarbon group having 1 to 20 carbon atoms and having at least one group of ether structures, tertiary amines, epoxy, carbonyl, and halogens, and "s" is 1 to 6.

### [Compound having a silyl group with two or more alkoxy substituent groups and having one or more nitrogen atoms]

In the present invention, a compound having a silyl group with two or more alkoxy substituent groups and having one or more nitrogen atoms can be used as the modifier having a functional group capable of interacting with carbon. Examples of such compounds include compounds represented by General Formula (5) below, hydrocarbyloxysilanes having a cyclic amino group including two or more nitrogen atoms represented by General Formula (6) below, hydrocarbyloxysilanes having functional groups such as other cyclic amines, non-cyclic amines, imines, and isocyanates, cyclic azasilanes, and the like. 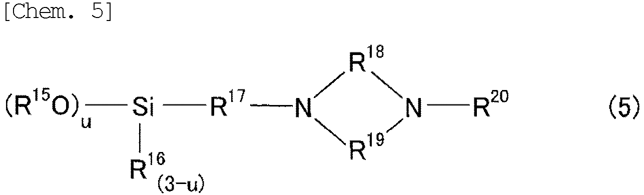 (In General Formula (5), R¹⁵ and R¹⁶ are each independently an alkyl or aryl group having 1 to 20 carbon atoms, R¹⁷ is an alkylene group having 1 to 20 carbon atoms, R¹⁸ and R¹⁹ are hydrocarbon groups having 1 to 6 carbon atoms, which may be the same or different, and form a 5-membered or larger ring structure with the two adjacent Ns, R²⁰ is a hydrocarbon group having 1 to 20 carbon atoms or a triorgano-substituted silyl group, and "u" is an integer of 2 or 3.) 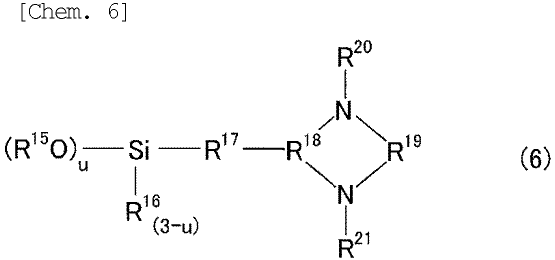 (In General Formula (6), R¹⁵ to R²⁰ and "u" are as defined above for General Formula (5), and R²¹ is a hydrocarbon group having 1 to 20 carbon atoms or an organo-substituted silyl group.)

### [Reactive polysiloxane compound represented by General Formula (8)]

In the present invention, a reactive polysiloxane compound represented by General Formula (8) below can be used as the siloxane compound having a functional group capable of interacting with carbon:

Y¹-CH₂CH₂-Si(R²⁶)(R²⁷)- {O-Si(R²⁶)(R²⁷)}_{z}-CH₂CH₂-Y² (8)

In General Formula (8), Y¹ is (X⁷)ₐ(R²⁸)_{b}Si- wherein X⁷ is a halogen and R²⁸ is a lower alkyl group having 20 or less carbon atoms. R²⁶ and R²⁷ are each a lower alkyl group having 20 or less carbon atoms, "a" is 2 or 3, "b" is 0 or 1, "a+b" is 3, and "z" is 1 to 50000.

### [Compound represented by General Formula (9)]

In the present invention, a compound represented by General Formula (9) below can be used as the modifier having a functional group capable of interacting with carbon. When the modification is performed using a siloxane compound as the modifier having a functional group capable of interacting with carbon, it is preferred to further react a compound represented by General Formula (9) below with the solution-polymerized aromatic vinyl-conjugated diene copolymer chain after the reaction with the siloxane compound.

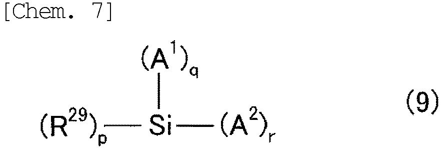

In General Formula (9), R²⁹ is a hydrocarbyl group, A¹ is a group reactive with an alkyl metal group as the active end of the solution-polymerized aromatic vinyl-conjugated diene copolymer chain having an active end or the reaction residue which is created by the reaction between the solution-polymerized aromatic vinyl-conjugated diene copolymer chain having an active end and the siloxane compound, A² is a nitrogen atom-containing group, "p" is an integer of 0 to 2, "q" is an integer of 1 to 3, "r" is an integer of 1 to 3, and "p+q+r" is 4.

The compound represented by General Formula (9) is presumed to react with the alkyl metal group as the active end of the solution-polymerized aromatic vinyl-conjugated diene copolymer chain obtained in the polymerization step, that is, -R⁻M⁺, or the group represented by -O⁻M⁺ as the reaction residue of the reaction with the siloxane compound (which is intended to include a hydroxyl group created as a result of conversion by hydrolysis of the group represented by -O⁻M⁺). When the siloxane compound is used in an amount of 1 mol or more based on the number of (-Si-O-) repeating units per mol of the polymerization initiator to almost completely consume the group represented by -R⁻M⁺, the compound represented by General Formula (9) can be almost completely reacted with the group represented by -O⁻M⁺ as the reaction residue of the reaction with the siloxane compound. Thus, the modifying structure derived from the compound represented by General Formula (9) can be appropriately introduced via the structure derived from the siloxane compound to the solution-polymerized aromatic vinyl-conjugated diene copolymer chain. Thereby, a cross-linked rubber having low heat buildup, reinforcing ability, and tear resistance balanced at a higher level can be obtained.

In the compound represented by General Formula (9), R²⁹ in General Formula (9) is a hydrocarbyl group, such as an alkyl group, a cycloalkyl group, an alkenyl group, an aryl group, or an aralkyl group, and is preferably an alkyl group having 1 to 6 carbon atoms. Examples of alkyl groups having 1 to 6 carbon atoms include a methyl group, an ethyl group, an n-propyl group, an isopropyl group, a butyl group, a pentyl group, a hexyl group, and the like. Among these, a methyl group and an ethyl group are more preferred, and a methyl group is particularly preferred.

In the compound represented by General Formula (9), A¹ in General Formula (9) is a group reactive with the alkyl metal group (i.e., R⁻M⁺) as the active end of the solution-polymerized aromatic vinyl-conjugated diene copolymer chain having an active end or the reaction residue created by the reaction between the solution-polymerized aromatic vinyl-conjugated diene copolymer chain having an active end and the siloxane compound (group typically represented by -O⁻ M⁺), and is preferably a group represented by -OR³⁰ (wherein R³⁰ is a hydrogen atom or a hydrocarbyl group). Examples of hydrocarbyl groups which can be R³⁰ include alkyl groups, cycloalkyl groups, alkenyl groups, aryl groups, aralkyl groups, and the like. From the viewpoint of reactivity with the alkyl metal group or the reaction residue, alkyl groups having 1 to 6 carbon atoms are preferred. Examples of alkyl groups having 1 to 6 carbon atoms include a methyl group, an ethyl group, an n-propyl group, an isopropyl group, a butyl group, a pentyl group, a hexyl group, and the like. Among these, a methyl group and an ethyl group are more preferred.

In the compound represented by General Formula (9), A² in General Formula (9) is a nitrogen atom-containing group, and is not particularly limited as long as the group has a nitrogen atom. Preferred are organic groups having a nitrogen atom, and examples thereof include a 3-aminopropyl group, a 4-aminobutyl group, a 3-(2-aminoethylamino)propyl group, a 2-dimethylaminoethyl group, a 3-dimethylaminopropyl group, a 3-diethylaminopropyl group, a 3-dipropylaminopropyl group, a 3-dibutylaminopropyl group, a 3-phenylmethylaminopropyl group, a 3-(4-methylpiperazinyl)propyl group, an N,N-bis(trimethylsilyl)aminopropyl group, an N,N-bis(triethylsilyl)aminopropyl group, an N,N',N'-tris(trimethylsilyl)-N-(2-aminoethyl)-3-aminopropyl group, and the like. Among these, in order to obtain a cross-linked rubber having low heat buildup, reinforcing ability, and tear resistance balanced at a higher level, groups containing a primary amino group having active hydrogen atoms and/or a secondary amino group having an active hydrogen atom, such as a 3-aminopropyl group, a 4-aminobutyl group, or a 3-(2-aminoethylamino)propyl group, are preferred, and a 3-(2-aminoethylamino)propyl group are more preferred. Note that "active hydrogen atom" means a hydrogen atom bonded to an atom other than a carbon atom, and the binding energy thereof is preferably lower than that of the carbon-hydrogen bond of a polymethylene chain.

In the compound represented by General Formula (9), "p" is an integer of 0 to 2, "q" is an integer of 1 to 3, "r" is an integer of 1 to 3, and "p+q+r" is 4. From the viewpoint of reactivity with the alkyl metal group as the active end of the solution-polymerized aromatic vinyl-conjugated diene copolymer chain having an active end or the reaction residue created by the reaction of the solution-polymerized aromatic vinyl-conjugated diene copolymer chain having an active end with the siloxane compound, "p", "q", and "r" are preferably an integer of 0 or 1, an integer of 2 or 3 and an integer of 1 or 2, respectively, and "p", "q", and "r" are more preferably 0, 3, and 1, respectively. Note that when "p" is 2, the two groups represented by R²⁹ in the molecule of the compound represented by General Formula (9) may be the same or different from each other. Similarly, when "q" is 2 or 3, the multiple groups represented by A¹ in the molecule of the compound represented by General Formula (9) may be the same or different from each other, and when "r" is 2 or 3, the multiple groups represented by A² in the molecule of the compound represented by General Formula (9) may be the same or different from each other.

Specific examples of compounds represented by General Formula (9) include, but are not particularly limited to, the followings: Examples of compounds in which A² in General Formula (9) is a group containing a primary amino group having active hydrogen atoms and/or a secondary amino group having an active hydrogen atom include compounds having a 3-aminopropyl group as A², such as 3-aminopropyldimethylmethoxysilane, 3-aminopropylmethyldimethoxysilane, 3-aminopropyltrimethoxysilane, 3-aminopropyldimethylethoxysilane, 3-aminopropylmethyldiethoxysilane, and 3-aminopropyltriethoxysilane; compounds having a 4-aminobutyl group as A², such as 4-aminobutyldimethylmethoxysilane, 4-aminobutylmethyldimethoxysilane, 4-aminobutyltrimethoxysilane, 4-aminobutyldimethylethoxysilane, 4-aminobutylmethyldiethoxysilane, and 4-aminobutyltriethoxysilane; compounds having a 3-(2-aminoethylamino)propyl group as A², such as 3-(2-aminoethylamino)propyldimethylmethoxysilane, 3-(2-aminoethylamino)propylmethyldimethoxysilane, 3-(2-aminoethylamino)propyltrimethoxysilane, 3-(2-aminoethylamino)propyldimethylethoxysilane, 3-(2-aminoethylamino)propylmethyldiethoxysilane, and 3-(2-aminoethylamino)propyltriethoxysilane; and the like. Among these, compounds having a 3-(2-aminoethylamino)propyl group as A² are preferred, and 3-(2-aminoethylamino)propyltrimethoxysilane is more preferred.

Specific examples of compounds in which A² in General Formula (9) is a group other than groups containing a primary amino group having active hydrogen atoms and/or a secondary amino group having an active hydrogen atom include compounds having a 3-dimethylaminopropyl group as A², such as 3-dimethylaminopropyltrimethoxysilane, 3-dimethylaminopropylmethyldimethoxysilane, 3-dimethylaminopropyldimethylmethoxysilane, 3-dimethylaminopropyltriethoxysilane, 3-dimethylaminopropylmethyldiethoxysilane, and 3-dimethylaminopropyldimethylethoxysilane; compounds having a 3-diethylaminopropyl group as A², such as 3-diethylaminopropyltrimethoxysilane, 3-diethylaminopropylmethyldimethoxysilane, 3-diethylaminopropyldimethylmethoxysilane, 3-diethylaminopropyltriethoxysilane, 3-diethylaminopropylmethyldiethoxysilane, and 3-diethylaminopropyldimethylethoxysilane; compounds having a 3-dipropylaminopropyl group as A², such as 3-dipropylaminopropyltrimethoxysilane, 3-dipropylaminopropylmethyldimethoxysilane, 3-dipropylaminopropyldimethylmethoxysilane, 3-dipropylaminopropyltriethoxysilane, 3-dipropylaminopropylmethyldiethoxysilane, and 3-dipropylaminopropyldimethylethoxysilane; compounds having a 3-dibutylaminopropyl group as A², such as 3-dibutylaminopropyltrimethoxysilane, 3-dibutylaminopropylmethyldimethoxysilane, 3-dibutylaminopropyldimethylmethoxysilane, 3-dibutylaminopropyltriethoxysilane, 3-dibutylaminopropylmethyldiethoxysilane, and 3-dibutylaminopropyldimethylethoxysilane; compounds having a 3-phenylmethylaminopropyl group as A², such as 3-phenylmethylaminopropyltrimethoxysilane, 3-phenylmethylaminopropylmethyldimethoxysilane, 3-phenylmethylaminopropyldimethylmethoxysilane, 3-phenylmethylaminopropyltriethoxysilane, 3-phenylmethylaminopropylmethyldiethoxysilane, and 3-phenylmethylaminopropyldimethylethoxysilane; compounds having a 3-(4-methylpiperazinyl) propyl group as A², such as 3-(4-methylpiperazinyl)propyltrimethoxysilane, 3-(4-methylpiperazinyl)propylmethyldimethoxysilane, 3-(4-methylpiperazinyl)propyldimethylmethoxysilane, 3-(4-methylpiperazinyl)propyltriethoxysilane, 3-(4-methylpiperazinyl)propylmethyldiethoxysilane, and 3-(4-methylpiperazinyl)propyldimethylethoxysilane;

compounds having an N,N-bis(trimethylsilyl)aminopropyl group as A², such as N,N-bis(trimethylsilyl)aminopropyltrimethoxysilane, N,N-bis(trimethylsilyl)aminopropyltriethoxysilane, N,N-bis(trimethylsilyl)aminopropylmethyldimethoxysilane, and N,N-bis(trimethylsilyl)aminopropylmethyldiethoxysilane; compounds having an N,N-bis(triethylsilyl)aminopropyl group as A², such as N,N-bis(triethylsilyl)aminopropyltrimethoxysilane, N,N-bis(trimethylsilyl)aminopropyltriethoxysilane, N,N-bis(triethylsilyl)aminopropylmethyldimethoxysilane, and N,N-bis(triethylsilyl)aminopropylmethyldiethoxysilane; compounds having an N,N',N'-tris(trimethylsilyl)-N-(2-aminoethyl)-3-aminopropyl group as A², such as N,N',N'-tris(trimethylsilyl)-N-(2-aminoethyl)-3-aminopropyltrimethoxysilane, N,N',N'-tris(trimethylsilyl)-N-(2-aminoethyl)-3-aminopropyltriethoxysilane, N,N',N'-tris(trimethylsilyl)-N-(2-aminoethyl)-3-aminopropylmethyldimethoxysilane, and N,N',N'-tris(trimethylsilyl)-N-(2-aminoethyl)-3-aminopropylmethyldiethoxysilane; and the like.

Examples of the silicon atom-containing modifier used in the above-mentioned polymerization step include (dimethylamino)dimethylvinylsilane, (ethylmethylamino)dimethylvinylsilane, (diethylamino)dimethylvinylsilane, (ethyl-n-propylamino)dimethylvinylsilane, (ethylisopropylamino)dimethylvinylsilane, (di-n-propylamino)dimethylvinylsilane, (diisopropylamino)dimethylvinylsilane, (n-butyl-n-propylamino)dimethylvinylsilane, (di-n-butylamino)dimethylvinylsilane,
(dimethylamino)diethylvinylsilane, (ethylmethylamino)diethylvinylsilane, (diethylamino)diethylvinylsilane, (ethyl-n-propylamino)diethylvinylsilane, (ethylisopropylamino)diethylvinylsilane, (di-n-propylamino)diethylvinylsilane, (diisopropylamino)diethylvinylsilane, (n-butyl-n-propylamino)diethylvinylsilane, (di-n-butylamino)diethylvinylsilane,
(dimethylamino)dipropylvinylsilane, (ethylmethylamino)dipropylvinylsilane, (diethylamino)dipropylvinylsilane, (ethyl-n-propylamino)dipropylvinylsilane, (ethylisopropylamino)dipropylvinylsilane, (di-n-propylamino)dipropylvinylsilane, (diisopropylamino)dipropylvinylsilane, (n-butyl-n-propylamino)dipropylvinylsilane, (di-n-butylamino)dipropylvinylsilane,
(dimethylamino)dibutylvinylsilane, (ethylmethylamino)dibutylvinylsilane, (diethylamino)dibutylvinylsilane, (ethyl-n-propylamino)dibutylvinylsilane, (ethylisopropylamino)dibutylvinylsilane, (di-n-propylamino)dibutylvinylsilane, (diisopropylamino)dibutylvinylsilane, (n-butyl-n-propylamino)dibutylvinylsilane, (di-n-butylamino)dibutylvinylsilane,
{di(trimethylsilyl)amino}dimethylvinylsilane, {di(t-butyldimethylsilyl)amino}dimethylvinylsilane, {di(trimethylsilyl)amino}diethylvinylsilane, {di(t-butyldimethylsilyl)amino}diethylvinylsilane, bis(dimethylamino)methylvinylsilane, bis(ethylmethylamino)methylvinylsilane, bis(diethylamino)methylvinylsilane, bis(ethyl-n-propylamino)methylvinylsilane, bis(ethylisopropylamino)methylvinylsilane, bis(di-n-propylamino)methylvinylsilane, bis(diisopropylamino)methylvinylsilane, bis(n-butyl-n-propylamino)methylvinylsilane, bis(di-n-butylamino)methylvinylsilane,
bis(dimethylamino)ethylvinylsilane, bis(ethylmethylamino)ethylvinylsilane, bis(diethylamino)ethylvinylsilane, bis(ethyl-n-propylamino)ethylvinylsilane, bis(ethylisopropylamino)ethylvinylsilane, bis(di-n-propylamino)ethylvinylsilane, bis(diisopropylamino)ethylvinylsilane, bis(n-butyl-n-propylamino)ethylvinylsilane, bis(di-n-butylamino)ethylvinylsilane,
bis(dimethylamino)propylvinylsilane, bis(ethylmethylamino)propylvinylsilane, bis(diethylamino)propylvinylsilane, bis(ethyl-n-propylamino)propylvinylsilane, bis(ethylisopropylamino)propylvinylsilane, bis(di-n-propylamino)propylvinylsilane, bis(diisopropylamino)propylvinylsilane, bis(n-butyl-n-propylamino)propylvinylsilane, bis(di-n-butylamino)propylvinylsilane,
bis(dimethylamino)butylvinylsilane, bis(ethylmethylamino)butylvinylsilane, bis(diethylamino)butylvinylsilane, bis(ethyl-n-propylamino)butylvinylsilane, bis(ethylisopropylamino)butylvinylsilane, bis(di-n-propylamino)butylvinylsilane, bis(diisopropylamino)butylvinylsilane, bis(n-butyl-n-propylamino)butylvinylsilane, bis(di-n-butylamino)butylvinylsilane,
bis{di(trimethylsilyl)amino}methylvinylsilane, bis{(t-butyldimethylsilyl)amino}methylvinylsilane, bis{di(trimethylsilyl)amino}ethylvinylsilane, bis{(t-butyldimethylsilyl)amino}ethylvinylsilane, tri(dimethylamino)vinylsilane, tri(ethylmethylamino)vinylsilane, tri(diethylamino)vinylsilane, tri(ethylpropylamino)vinylsilane, tri(dipropylamino)vinylsilane, tri(butylpropylamino)vinylsilane, and the like.

The compound having a functional group capable of interacting with carbon used in the polymerization step may be one or more selected from the group consisting of 4,4'-vinylidenebis(n,n-dimethylaniline), 3-(2-pyrrolidinoethyl)styrene, 4-(2-pyrrolidinoethyl)styrene, and (3-(2-pyrrolidino-1-methylethyl)-alpha-methylstyrene.

In the modification step, the modifier having a functional group capable of interacting with carbon is reacted with the active end of the solution-polymerized aromatic vinyl-conjugated diene copolymer chain having an active end obtained in the polymerization step described above. Such a reaction results in introduction of a modifying structure derived from the modifier having a functional group capable of interacting with carbon into the solution-polymerized aromatic vinyl-conjugated diene copolymer chain. Thus, the functional group capable of interacting with carbon can be introduced into the solution-polymerized aromatic vinyl-conjugated diene copolymer.

The modifier having a functional group capable of interacting with carbon can be reacted with the solution-polymerized aromatic vinyl-conjugated diene copolymer chain having an active end by any method. Examples of such methods include a method of mixing these substances in a solvent capable of dissolving them, and the like. The solvent used at this time can be those listed as the inert solvents used in the polymerization step described above. At this time, a preferred and simple process is adding the modifier having a functional group capable of interacting with carbon to the polymerization solution used in the polymerization for obtaining the solution-polymerized aromatic vinyl-conjugated diene copolymer chain having an active end. Furthermore, in this case, the modifier having a functional group capable of interacting with carbon is preferably dissolved in an inert solvent, and then added to the polymerization system. The solution concentration is preferably within the range of 1 to 50% by weight. The reaction temperature is typically 0 to 120°C, although not particularly limited thereto. The reaction time is typically 1 minute to 1 hour, although not particularly limited thereto.

When a modifier having a functional group capable of interacting with carbon and having coupling action is used, a plurality of solution-polymerized aromatic vinyl-conjugated diene copolymer chains is bonded via a modifying structure derived from the modifier having a functional group capable of interacting with carbon, so that the functional group capable of interacting with carbon can be introduced into the solution-polymerized aromatic vinyl-conjugated diene copolymer. For example, when tin tetrachloride or dioctyltin dichloride is used as the modifier having a functional group capable of interacting with carbon, so that a plurality of solution-polymerized aromatic vinyl-conjugated diene copolymer chains is bonded via the tin atom, so that the tin atom can be introduced into the solution-polymerized aromatic vinyl-conjugated diene copolymer.

The amount of the modifier having a functional group capable of interacting with carbon is preferably 0.1 to 5 mol, more preferably 0.2 to 2 mol, still more preferably 0.4 to 1.5 mol per mol of the polymerization initiator used in the polymerization step, although not particularly limited thereto. When the modifier having a functional group capable of interacting with carbon is used in an amount within the above ranges, a cross-linked rubber having low heat buildup, reinforcing ability, and tear resistance balanced at a higher level can be obtained.

After the reaction with the modifier having a functional group capable of interacting with carbon, a known polymerization terminator or the like is added as needed to deactivate the reaction system, and then an antioxidant such as a phenol-based stabilizer, a phosphorus-based stabilizer, or a sulfur-based stabilizer, a crumb forming agent, a scale inhibitor, and the like are added to the reaction solution as needed. Subsequently, the polymerization solvent is separated from the reaction solution by direct drying, steam stripping, or the like to recover the solution-polymerized aromatic vinyl-conjugated diene copolymer. Note that before the polymerization solvent is separated from the reaction solution, an extender oil may be mixed with the polymerization solution, and the solution-polymerized aromatic vinyl-conjugated diene copolymer may be recovered as an oil extended rubber.

Examples of oil extenders used to recover the solution-polymerized aromatic vinyl-conjugated diene copolymer as an oil extended rubber include paraffin-based, aromatic-based, and naphthene-based oil-based softening agents, plant-based softening agents, fatty acids, and the like. When an oil-based softening agent is used, the content of polycyclic aromatic compounds extracted by the method of IP346 (test method of THE INSTITUTE PETROLEUM of the U.K.) is preferably less than 3%. When an oil extender is used, the amount thereof is preferably 1 to 100 parts by weight, more preferably 2 to 60 parts by weight, further preferably 3 to 50 parts by weight with respect to 100 parts by weight of the solution-polymerized aromatic vinyl-conjugated diene copolymer.

In the present invention, before the modifier having a functional group capable of interacting with carbon is reacted with the solution-polymerized aromatic vinyl-conjugated diene copolymer chain having an active end, a coupling agent, a modifier, or the like typically conventionally used may be added to the polymerization system to cause coupling or modification of a portion of the active end of the solution-polymerized aromatic vinyl-conjugated diene copolymer chain having an active end as far as the advantageous effects of the present invention are not imparted.

The coupling agent used in the present invention as needed is not particularly limited. For example, those having coupling action among the above-mentioned modifiers having a functional group capable of interacting with carbon and other halogenated metal compounds can be used. Examples of those having coupling action among the above-mentioned modifiers having a functional group capable of interacting with carbon include halogenated tin compounds such as tin tetrachloride and dioctyltin dichloride. Examples of other halogenated metal compounds include silicon tetrachloride, hexachlorodisilane, bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, 1,6-bis(trichlorosilyl)hexane, and the like.

The coupling ratio of the solution-polymerized aromatic vinyl-conjugated diene copolymer used in the present invention is preferably 10 to 90% by weight, more preferably 20 to 75% by weight, still more preferably 30 to 60% by weight, particularly preferably 34 to 50% by weight although not particularly limited thereto. When the coupling ratio is controlled within the above ranges, a cross-linked rubber having low heat buildup, reinforcing ability, and tear resistance balanced at a higher level can be obtained. Note that the coupling ratio refers to the weight fraction of polymer molecules having a molecular weight at least 1.8 times the peak top molecular weight of the solution-polymerized aromatic vinyl-conjugated diene copolymer chain having an active end before the reactions with the above-mentioned modifier having a functional group capable of interacting with carbon and a coupling agent and an additional modifier optionally used, to the total weight of the finally obtained solution-polymerized aromatic vinyl-conjugated diene copolymer. The molecular weights at this time are determined as polystyrene-equivalent molecular weights by gel permeation chromatography.

The rubber composition for sidewalls according to the present invention may further comprise a rubber other than the above-mentioned solution-polymerized aromatic vinyl-conjugated diene copolymer as a rubber component. In this case, the proportion of the solution-polymerized aromatic vinyl-conjugated diene copolymer is preferably 5% by weight or more, more preferably 8% by weight or more, still more preferably 10 to 80% by weight, further still more preferably 10 to 50% by weight, particularly preferably 10 to 30% by weight, most preferably 10 to 20% by weight in 100% by weight of the total rubber components contained in the rubber composition for sidewalls according to the present invention.

### <Natural rubber>

The rubber composition for sidewalls according to the present invention preferably further comprises a natural rubber as a rubber component in addition to the above-mentioned solution-polymerized aromatic vinyl-conjugated diene copolymer. As the natural rubber, normal natural rubber and reformed natural rubbers such as epoxidized natural rubbers obtained by introducing an epoxy group and hydrogenated natural rubbers can be used. When the natural rubber is contained, a cross-linked rubber having further reduced heat buildup and further enhanced reinforcing ability and tear resistance can be obtained.

The amount of the natural rubber present in the rubber composition for sidewalls according to the present invention is preferably 10 to 80% by weight, more preferably 20 to 75% by weight, still more preferably 30 to 70% by weight, particularly preferably 45 to 68% by weight, most preferably 55 to 65% by weight in 100% by weight of the total rubber components contained in the rubber composition for sidewalls according to the present invention. When the natural rubber is compounded in an amount within the above ranges, a cross-linked rubber having further reduced heat buildup and further enhanced reinforcing ability and tear resistance can be obtained.

### <Polybutadiene rubber>

The rubber composition for sidewalls according to the present invention preferably further comprises a polybutadiene rubber as a rubber component in addition to the above-mentioned solution-polymerized aromatic vinyl-conjugated diene copolymer. When the polybutadiene rubber is contained, a cross-linked rubber having further enhanced reinforcing ability and tear resistance can be obtained. The polybutadiene rubber may be any of low cis BR (polybutadiene rubber), high cis BR, high trans BR (trans bond content of butadiene units: 70 to 95%), and these may be used in combination. Further examples of usable polybutadiene rubbers include modified polybutadiene rubbers obtained by introducing a nitrogen atom-containing functional group, a tin atom-containing functional group, an oxygen atom-containing functional group, or the like.

The amount of the polybutadiene rubber present in the rubber composition for sidewalls according to the present invention is preferably 10 to 80% by weight, more preferably 13 to 60% by weight, still more preferably 15 to 50% by weight, particularly preferably 18 to 40% by weight, most preferably 20 to 35% by weight in 100% by weight of the total rubber components in the rubber composition for sidewalls according to the present invention. When the polybutadiene rubber is compounded in an amount within the above ranges, a cross-linked rubber having further enhanced reinforcing ability and tear resistance can be obtained.

In addition to the above-mentioned solution-polymerized aromatic vinyl-conjugated diene copolymer and the natural rubber and/or the polybutadiene rubber optionally used, the rubber composition for sidewalls according to the present invention may further comprise an additional rubber other than the former rubbers as a rubber component. Examples of such additional rubbers include polyisoprene rubbers, emulsion polymerized styrene-butadiene copolymer rubbers, solution polymerized styrene-butadiene copolymer rubbers, styrene-isoprene copolymer rubbers, butadiene-isoprene copolymer rubbers, styrene-isoprene-butadiene copolymer rubbers, acrylonitrile-butadiene copolymer rubbers, acrylonitrile-styrene-butadiene copolymer rubbers, ring-opened polymers of cyclic olefins, hydrogenated conjugated diene polymers, and the like, but exclude the above-mentioned solution-polymerized aromatic vinyl-conjugated diene copolymer (i.e., the solution-polymerized aromatic vinyl-conjugated diene copolymer having a functional group capable of interacting with carbon in which the content of the aromatic vinyl monomer unit and the vinyl bond content in the conjugated diene monomer unit are within the above specific ranges). These rubbers may be used alone or in combination of two or more.

In the case where such an additional rubber is compounded, the content thereof can be appropriately selected in the range not inhibiting the advantageous effects of the present invention. The content expressed as a proportion in the total rubber components in the rubber composition for sidewalls according to the present invention is 50% by weight or less, more preferably 20% by weight or less.

### <Resin>

The rubber composition for sidewalls according to the present invention preferably contains a resin in addition to the rubber components. Use of the resin imparts tackiness to the rubber composition for sidewalls, and enhances the dispersibility of carbon in the rubber composition for sidewalls. This results in a cross-linked rubber having further enhanced reinforcing ability and tear resistance. Further, as an effect similar to that of the plasticizer, the processability of the rubber composition for sidewalls can also be improved. For this reason, the resulting rubber composition for sidewalls according to the present invention can be more suitably used in applications to sidewalls.

Examples of the resin include a C5 petroleum resin, a C5/C9 petroleum resin, a C9 petroleum resin, a polyolefin resin, a dicyclopentadiene resin, a terpene resin, a terpene phenol resin, an aromatic modified terpene resin, an alkylphenol-acetylene resin, a rosin resin, a rosin ester resin, an indene resin, a C9 resin containing indene, an α-methylstyrene-indene copolymer resin, a coumarone-indene resin, farnesene resin, a polylimonene resin, and the like. These resins may be modified, or may be hydrogenated. Among these, to obtain a cross-linked rubber having low heat buildup, reinforcing ability, and tear resistance balanced at a higher level, petroleum resins such as a C5 petroleum resin, a C5/C9 petroleum resin, a C9 petroleum resin, a polyolefin resin, a dicyclopentadiene resin, an alkylphenol-acetylene resin, and a C9 resin containing indene are preferred, and a C9 petroleum resin, a dicyclopentadiene resin, and an alkylphenol-acetylene resin are more preferred. These resins are used alone or in combination of two or more.

The amount of the resin compounded is preferably 0.1 to 5 parts by weight, more preferably 0.2 to 4 parts by weight, still more preferably 0.5 to 3.5 parts by weight, particularly preferably 1 to 3 parts by weight, most preferably 1.5 to 2.5 parts by weight relative to 100 parts by weight of the rubber components in the rubber composition for sidewalls. When the amount of the resin compounded is controlled within the above ranges, a cross-linked rubber having low heat buildup, reinforcing ability, and tear resistance balanced at a higher level can be obtained.

### <Carbon>

The rubber composition for sidewalls according to the present invention comprises carbon (carbon black) in addition to the above-mentioned solution-polymerized aromatic vinyl-conjugated diene copolymer.

Examples of the carbon used in the present invention include furnace black, acetylene black, thermal black, channel black, graphite, and the like. Among these, to obtain a cross-linked rubber having low heat buildup, reinforcing ability, and tear resistance balanced at a higher level, use of furnace black is preferable. Specific examples thereof include SAF, ISAF, ISAF-HS, ISAF-LS, IISAF-HS, HAF, HAF-HS, HAF-LS, FEF, MAF, GPF, SRF, and the like. Among these, HAF-HS, FEF, HAF, MAF, and GPF are preferred, and FEF is more preferred. These can be used alone or in combination of two or more.

The carbon has a nitrogen adsorption specific surface area measured by the BET method of preferably 85 m²/g or lower, more preferably 20 to 65 m²/g, still more preferably 35 to 50 m²/g. When the carbon having a specific surface area within the above ranges is used, a cross-linked rubber having low heat buildup, reinforcing ability, and tear resistance balanced at a higher level can be obtained. The nitrogen adsorption specific surface area can be measured by the BET method in accordance with JIS K-6217.

The carbon has an iodine adsorption of preferably 90 mg/g or lower, more preferably 20 to 65 mg/g, still more preferably 35 to 55 mg/g. When the carbon having an iodine adsorption within the above ranges is used, a cross-linked rubber having low heat buildup, reinforcing ability, and tear resistance balanced at a higher level can be obtained. The iodine adsorption can be measured in accordance with JIS Z-8091.

The carbon has a DBP absorption (dibutyl phthalate absorption) measured by the A method of preferably 140 cm³/100 g or lower, more preferably 130 to 50 cm³/100 g, still more preferably 120 to 60 cm³/100 g. When the carbon having a DBP absorption within the above ranges is used, a cross-linked rubber having low heat buildup, reinforcing ability, and tear resistance balanced at a higher level can be obtained. The DBP absorption can be measured by the A method in accordance with JIS Z-8091.

The amount of the carbon compounded in the rubber composition for sidewalls according to the present invention is preferably 10 to 200 parts by weight, more preferably 20 to 150 parts by weight, still more preferably 30 to 100 parts by weight, particularly preferably 35 to 80 parts by weight, most preferably 40 to 60 parts by weight relative to 100 parts by weight of the rubber components in the rubber composition for sidewalls. When the amount of the carbon compounded falls within the above ranges, a cross-linked rubber having low heat buildup, reinforcing ability, and tear resistance balanced at a higher level can be obtained.

### <Other components>

Besides the components above, needed amounts of compounding agents such as a cross-linking accelerator, a cross-linking activator, an antioxidant, a filler (excluding the carbon), an activating agent, a process oil, a plasticizer, a lubricant, a tackifier, wax, a compatibilizer, and a surfactant can be compounded with the rubber composition for sidewalls according to the present invention by a normal method.

The rubber composition for sidewalls according to the present invention preferably further comprises a cross-linking agent. Examples of the cross-linking agent include sulfur, halogenated sulfur, organic peroxides, quinone dioximes, organic polyvalent amine compounds, alkylphenol resins having a methylol group, and the like. Among these, sulfur is preferably used. The amount of the cross-linking agent compounded is preferably 0.1 to 15 parts by weight, more preferably 0.2 to 5 parts by weight, particularly preferably 0.5 to 2 parts by weight relative to 100 parts by weight of the rubber components in the rubber composition for sidewalls.

In the case where sulfur or a sulfur-containing compound is used as the cross-linking agent, use in combination with a cross-linking accelerator and a cross-linking activator is preferred. Examples of cross-linking accelerators include sulfenamide cross-linking accelerators; guanidine cross-linking accelerators; thiourea cross-linking accelerators; thiazole cross-linking accelerators; thiuram cross-linking accelerators; dithiocarbamic acid cross-linking accelerators; xanthic acid cross-linking accelerators; and the like. Among these, preferred are those containing a sulfenamide-based cross-linking accelerator. These cross-linking accelerators are used alone or in combination of two or more. The amount of the cross-linking accelerator compounded is preferably 0.1 to 15 parts by weight, more preferably 0.5 to 5 parts by weight, particularly preferably 1 to 4 parts by weight relative to 100 parts by weight of the rubber components in the rubber composition for sidewalls.

Examples of cross-linking activators include higher fatty acids such as stearic acid; zinc oxide; and the like. These cross-linking activators may be used alone or in combination of two or more. The amount of the cross-linking activator compounded is preferably 0.05 to 20 parts by weight, particularly preferably 0.5 to 15 parts by weight relative to 100 parts by weight of the rubber components in the rubber composition for sidewalls.

Examples of antioxidants include discoloring age resistors having fatigue resistance and ozone resistance, such as N-isopropyl-N'-phenyl-p-phenylenediamine (IPPD), N-1,3-dimethylbutyl-N'-phenyl-p-phenylenediamine (6PPD), N-1,4-dimethylpentyl-N'-phenyl-p-phenylenediamine (7PPD), and N,N'-bis-(1,4-dimethylpentyl)-p-phenylenediamine (77PD), discoloring age resistors having fatigue protection action but not ozone resistance, such as phenyl-α-naphthylamine (PAN), discoloring age resistors having low fatigue resistance without ozone resistance, such as octylated diphenylamine (ODPA), non-discoloring age resistors having fatigue protection action and favorable thermal protection action, such as styrenated phenol (SPH), and the like. These antioxidants are used alone or in combination of two or more. The amount of the antioxidant is preferably 0.1 to 15 parts by weight, more preferably 0.5 to 10 parts by weight, particularly preferably 1 to 5 parts by weight relative to 100 parts by weight of the rubber components in the rubber composition for sidewalls.

Examples of waxes include paraffin wax, carnauba wax, and the like. These waxes are used alone or in combination of two or more. The amount of the wax compounded is preferably 0.1 to 15 parts by weight, more preferably 0.5 to 10 parts by weight, particularly preferably 1 to 5 parts by weight relative to 100 parts by weight of the rubber components in the rubber composition for sidewalls.

The rubber composition for sidewalls according to the present invention may further contain silica. The silica can be any silica, and dry white carbon, wet white carbon, colloidal silica, precipitated silica, or the like can be used, for example. A carbon-silica dual phase filler composed of silica carried on the surface of carbon can also be used. Among these, preferred is wet white carbon containing hydrous silicic acid as the main component. These can be used alone or in combination of two or more.

The amount of the silica compounded in the rubber composition for sidewalls according to the present invention is preferably 0 to 50 parts by weight, more preferably 0 to 20 parts by weight, still more preferably 0 to 10 parts by weight, particularly preferably 0 parts by weight relative to 100 parts by weight of the carbon in the rubber composition for sidewalls. In other words, particularly preferably, the rubber composition for sidewalls according to the present invention does not substantially contain silica.

In the case where the rubber composition for sidewalls according to the present invention contains silica, a silane coupling agent may be further compounded. The amount of the silane coupling agent compounded is preferably 0.1 to 30 parts by weight, more preferably 1 to 15 parts by weight relative to 100 parts by weight of the silica.

### <Method for producing rubber composition for sidewalls>

To obtain the rubber composition for sidewalls according to the present invention, the ingredients may be kneaded according to an ordinary method. For example, a target composition can be obtained by kneading ingredients other than thermally unstable ingredients, such as a cross-linking agent and a cross-linking accelerator, with the solution-polymerized aromatic vinyl-conjugated diene copolymer and carbon, and then mixing thermally unstable ingredients, such as a cross-linking agent and a cross-linking accelerator, with the kneaded product. The kneading temperature of the ingredients other than the thermally unstable ingredients and the solution-polymerized aromatic vinyl-conjugated diene copolymer is preferably 80 to 200°C, more preferably 120 to 180°C, and the kneading time is preferably 30 seconds to 30 minutes. The kneaded product and the thermally unstable ingredients are mixed after the material is cooled down to typically 100°C or lower, preferably 80°C or lower.

### <Cross-linked rubber>

The cross-linked rubber according to the present invention is obtained by cross-linking the above-mentioned rubber composition for sidewalls according to the present invention.

The rubber composition for sidewalls according to the present invention can be cross-linked by any cross-linking method without limitation, and the method can be selected depending on the shape, size, or the like of the cross-linked rubber. The rubber composition for sidewalls may be charged in a mold, and shaped and cross-linked at the same time by heating, or the rubber composition for sidewalls may be preliminarily shaped, and then cross-linked by heating. The cross-linking temperature is preferably 100 to 200°C, more preferably 130 to 190°C, and the cross-linking time is preferably 1 minute to 24 hours, more preferably 2 minutes to 12 hours, still more preferably 3 minutes to 6 hours.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking.

As a heating method, a common method used to cross-link rubber, such as press heating, steam heating, oven heating, or hot air heating, can be appropriately selected.

Since the cross-linked rubber according to the present invention is prepared using the rubber composition for sidewalls according to the present invention, the cross-linked rubber has reduced heat buildup and has reinforcing ability and tear resistance in a good balance. For this reason, the cross-linked rubber according to the present invention is suitably used in applications to sidewalls of various tires such as all-season tires, high-performance tires, and studless tires.

### EXAMPLES

Hereinafter, the present invention will be described in more detail with reference to Examples, but these Examples should not be construed as limitations to the present invention. Hereinafter, "parts" is on a weight basis unless otherwise specified. The tests and the evaluations were performed as follows.

### [Weight average molecular weight, molecular weight distribution, coupling ratio]

Weight average molecular weight (Mw), molecular weight distribution (Mw/Mn), and coupling ratio were determined based on a polystyrene-equivalent molecular weight chart obtained by gel permeation chromatography (GPC). The specific measurement conditions of the gel permeation chromatography were as follows:
Apparatus: high performance liquid chromatograph (available from Tosoh Corporation, trade name "HLC-8320")
Columns: two polystyrene columns available from Tosoh Corporation, trade name "GMH-HR-H", which were connected in series.
Detector: differential refractometer
Eluent: tetrahydrofuran
Column temperature: 40°C

The coupling ratio of an aromatic vinyl-conjugated diene copolymer chain was determined based on an elution curve obtained by the gel permeation chromatography under the conditions shown above, where the area ratio of a peak part with a peak top molecular weight at least 1.8 times the peak top molecular weight of a peak with the smallest molecular weight to the total elution area was regarded as a coupling ratio value.

### [Styrene unit content, vinyl bond content]

Styrene unit content and vinyl bond content were measured by ¹H-NMR.

### [Mooney viscosity (ML(1+4) 100°C)]

Measurement was performed using a Mooney viscometer (available from SHIMADZU Corporation) in accordance with JIS K6300-1 (2013).

### [Glass transition temperature (Tg)]

Measurement was performed in a helium atmosphere (gas flow rate: 20.0 ml/min) using a differential scanning calorimeter (available from PerkinElmer Co., Ltd., trade name: "DSC8500") in accordance with JIS K6240 (2011). The peak top temperature of a differential curve of the resulting DSC curve was determined as the glass transition temperature (Tg) .

### [Heat buildup of cross-linked rubber]

The heat buildup of a cross-linked rubber was evaluated by measuring the tan δ value at 60°C of a test piece having a length of 50 mm, a width of 12.7 mm, and a thickness of 2 mm using ARES-G2 available from TA Instruments, Inc. at a dynamic strain of 2.5% and 10 Hz. Heat buildup was determined as an index where the measured value of Comparative Example 1 was 100. A greater index indicates lower heat buildup.

### [Reinforcing ability of cross-linked rubber]

For the reinforcing ability of a cross-linked rubber, a stress at 100% stretch (M100) and a stress at 300% stretch (M300) were measured, respectively, in accordance with JIS K 6251 for a dumbbell-shaped test piece No. 3 using Strograph AE Elastomer (available from Toyo Seiki Seisaku-sho, Ltd.) at room temperature and at a stretching speed of 500 mm/min. The reinforcing ability was represented by a ratio of a stress at 300% stretch to a stress at 100% stretch (M300/M100), and was determined as an index where the measured value in Comparative Example 1 was 100. A greater index indicates a better reinforcing ability.

### [Tear resistance of cross-linked rubber]

Tear strength of an angle test piece with no cut-out was measured in accordance with JIS K6252-1 using Strograph AE Elastomer (available from Toyo Seiki Seisaku-sho, Ltd.). Tear resistance was determined as an index where the measured value of the tear strength in Comparative Example 1 was 100. A greater index indicates higher tear resistance.

### [Production Example 1]

### (Production of styrene butadiene copolymer (SBR1))

Under a nitrogen atmosphere, 455.6 parts of cyclohexane, 11.9 parts of styrene, 36.1 parts of 1,3-butadiene, and 0.033 parts of tetramethylethylenediamine were placed into an autoclave with a stirrer, and then 0.037 parts of n-butyllithium was added, and polymerization was started at 40°C. After 10 minutes had passed from the start of the polymerization, 3.1 parts of styrene and 26.9 parts of 1,3-butadiene were continuously added over 40 minutes. Subsequently, 22.0 parts of 1,3-butadiene was continuously added over 30 minutes, followed by further stirring for 10 minutes. The highest temperature during the polymerization reaction was 75°C. After it was confirmed that the polymerization conversion ratio reached 95% to 100%, 0.016 parts of tin tetrachloride was added, and was reacted for 10 minutes. Subsequently, 0.083 parts of N-phenylpyrrolidone was added, and was reacted for 15 minutes. Subsequently, methanol as a polymerization terminator was added in an amount equivalent to two times the moles of n-butyllithium used, affording a polymer solution. Then, 0.20 parts of Irganox 1520L (available from BASF SE) and 0.20 parts of Irganox 1076 (available from BASF SE) as antioxidants relative to 100 parts of the copolymer contained in this polymer solution were added to the polymer solution. Thereafter, the solvent was removed by steam stripping, followed by hot-air drying to yield a solid styrene butadiene copolymer (SBR1). The resulting styrene butadiene copolymer (SBR1) was measured for weight average molecular weight, molecular weight distribution, coupling ratio, styrene unit content, vinyl bond content, Mooney viscosity (ML(1+4) 100°C), and glass transition temperature. The results are shown in Table 1.

The resulting styrene butadiene copolymer (SBR1) contained a terminally modified copolymer having a functional group capable of interacting with carbon at the polymer chain end, the functional group capable of interacting with carbon having a modifying group derived from N-phenylpyrrolidone (organic group containing an oxygen atom and a nitrogen atom) (the same applies to Production Examples 3, and 5 to 9 described later).

### [Production Example 2]

### (Production of styrene butadiene copolymer (SBR2))

A styrene butadiene copolymer (SBR2) was obtained by the same method as that in Production Example 1 except that, unlike the production of the styrene butadiene copolymer (SBR1) in Production Example 1 where 0.083 parts of N-phenylpyrrolidone was added and reacted for 15 minutes, 0.510 parts of polyorganosiloxane represented by General Formula (10) below was added in the form of a 40% xylene solution and reacted for 20 minutes, and then 0.14 parts of 3-(2-aminoethylamino)propyltrimethoxysilane was added in the form of a 50% xylene solution and reacted for 15 minutes. The resulting styrene butadiene copolymer (SBR2) was measured in the same manner as in Production Example 1, and the results are shown in Table 1.

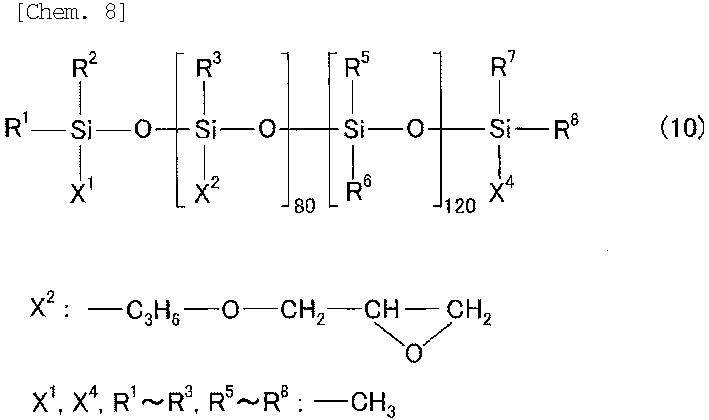

The resulting styrene butadiene copolymer (SBR2) contained a terminally modified copolymer having a functional group capable of interacting with carbon at the polymer chain end, the functional group capable of interacting with carbon having a modifying structure derived from the polyorganosiloxane represented by General Formula (10) below and 3-(2-aminoethylamino)propyltrimethoxysilane (modifying structure having an oxygen atom and a nitrogen atom) .

### [Production Example 3]

### (Production of styrene butadiene copolymer (SBR3))

A styrene butadiene copolymer (SBR3) was obtained by the same method as that in Production Example 1 except that in production of the styrene butadiene copolymer (SBR1) in Production Example 1, the amount of n-butyllithium used was changed from 0.037 parts to 0.041 parts, and 0.030 parts of dioctyltin dichloride was used instead of 0.016 parts of tin tetrachloride. The resulting styrene butadiene copolymer (SBR3) was measured in the same manner as in Production Example 1, and the results are shown in Table 1.

### [Production Example 4]

### (Production of styrene butadiene copolymer (SBR4))

A styrene butadiene copolymer (SBR4) was obtained by the same method as that in Production Example 1 except that in production of the styrene butadiene copolymer (SBR1) in Production Example 1, 0.178 parts of N,N-bis(trimethylsilyl)aminopropylmethyldiethoxysilane was used instead of 0.083 parts of N-phenylpyrrolidone. The resulting styrene butadiene copolymer (SBR4) was measured in the same manner as in Production Example 1, and the results are shown in Table 1.

The resulting styrene butadiene copolymer (SBR4) contained a terminally modified copolymer having a functional group capable of interacting with carbon at the polymer chain end, the functional group capable of interacting with carbon having a modifying group derived from N-bis(trimethylsilyl)aminopropylmethyldiethoxysilane (organic group containing an oxygen atom and a nitrogen atom).

### [Production Example 5]

### (Production of styrene butadiene copolymer (SBR5))

A styrene butadiene copolymer (SBR5) was obtained by changing the amounts of styrene, 1,3-butadiene, and tetramethylethylenediamine used in production of the styrene butadiene copolymer (SBR1) in Production Example 1 as follows. Specifically, a styrene butadiene copolymer (SBR5) was obtained by the same method as that in Production Example 1 except that before the start of polymerization, 7.8 parts of styrene, 36.1 parts of 1,3-butadiene, and 0.030 parts of tetramethylethylenediamine were charged; after 10 minutes had passed from the start of the polymerization, 1.8 parts of styrene and 31.9 parts of 1,3-butadiene were continuously added over 40 minutes, and then 22.4 parts of 1,3-butadiene was continuously added over 30 minutes. The resulting styrene butadiene copolymer (SBR5) was measured in the same manner as in Production Example 1, and the results are shown in Table 1.

### [Production Example 6]

### (Production of styrene butadiene copolymer (SBR6))

A styrene butadiene copolymer (SBR6) was obtained by changing the amounts and timings of styrene, 1,3-butadiene, and tetramethylethylenediamine used, the type of the modifier and the amount thereof used, and the polymerization temperature in production of the styrene butadiene copolymer (SBR1) in Production Example 1 as follows. Specifically, a styrene butadiene copolymer (SBR6) was obtained by the same method as that in Production Example 1 except that before the start of polymerization, 15.0 parts of styrene, 33.0 parts of 1,3-butadiene, and 0.013 parts of tetramethylethylenediamine were charged, and polymerization was started at 50°C; after 10 minutes had passed, 3.0 parts of styrene and 27.0 parts of 1,3-butadiene were continuously added over 50 minutes, and then 22.0 parts of 1,3-butadiene was continuously added over 40 minutes; and 0.051 parts of N-methylpyrrolidone was used instead of 0.083 parts of N-phenylpyrrolidone. The resulting styrene butadiene copolymer (SBR6) was measured in the same manner as in Production Example 1, and the results are shown in Table 1.

### [Production Example 7]

### (Production of styrene butadiene copolymer (SBR7))

A styrene butadiene copolymer (SBR7) was obtained by changing the amounts and timings of styrene, 1,3-butadiene, and tetramethylethylenediamine used and the polymerization temperature in production of the styrene butadiene copolymer (SBR1) in Production Example 1 as follows. Specifically, a styrene butadiene copolymer (SBR7) was obtained by the same method as that in Production Example 1 except that before the start of polymerization, 10.0 parts of styrene, 35.0 parts of 1,3-butadiene, and 0.012 parts of tetramethylethylenediamine were charged, and polymerization was started at 50°C; after 10 minutes had passed, 55.0 parts of 1,3-butadiene was continuously added over 95 minutes, followed by further stirring for 20 minutes without additionally adding 1,3-butadiene. The resulting styrene butadiene copolymer (SBR7) was measured in the same manner as in Production Example 1, and the results are shown in Table 1.

### [Production Example 8]

### (Production of styrene butadiene copolymer (SBR8))

A styrene butadiene copolymer (SBR8) was obtained by changing the amounts and timings of styrene, 1,3-butadiene, and tetramethylethylenediamine used and the polymerization temperature in production of the styrene butadiene copolymer (SBR1) in Production Example 1 as follows. Specifically, a styrene butadiene copolymer (SBR8) was obtained by the same method as that in Production Example 1 except that before the start of polymerization, 5.0 parts of styrene, 40.0 parts of 1,3-butadiene, and 0.010 parts of tetramethylethylenediamine were charged, and polymerization was started at 50°C; after 10 minutes had passed, 55.0 parts of 1,3-butadiene was continuously added over 80 minutes, followed by further stirring for 20 minutes without additionally adding 1,3-butadiene. The resulting styrene butadiene copolymer (SBR8) was measured in the same manner as in Production Example 1, and the results are shown in Table 1.

### [Production Example 9]

### (Production of styrene butadiene copolymer (SBR9))

A styrene butadiene copolymer (SBR9) was obtained by changing the amounts and timings of styrene, 1,3-butadiene, and tetramethylethylenediamine used and the polymerization temperature in production of the styrene butadiene copolymer (SBR1) in Production Example 1 as follows. Specifically, a styrene butadiene copolymer (SBR9) was obtained by the same method as that in Production Example 1 except that before the start of polymerization, 14.6 parts of styrene, 37.4 parts of 1,3-butadiene, and 0.082 parts of tetramethylethylenediamine were charged, and polymerization was started at 40°C; after 10 minutes had passed, 6.4 parts of styrene and 41.6 parts of 1,3-butadiene were continuously added over 30 minutes, followed by stirring for 30 minutes without additionally adding 1,3-butadiene; and the highest temperature during the polymerization reaction was 60°C. The resulting styrene butadiene copolymer (SBR9) was measured in the same manner as in Production Example 1, and the results are shown in Table 1.

### [Production Example 10]

### (Production of styrene butadiene copolymer (SBR10))

A styrene butadiene copolymer (SBR10) was obtained by changing the amounts and timings of styrene, 1,3-butadiene, and tetramethylethylenediamine used and the coupling conditions in production of the styrene butadiene copolymer (SBR1) in Production Example 1 as follows. Specifically, a styrene butadiene copolymer (SBR10) was obtained by the same method as that in Production Example 1 except that before the start of polymerization, 19.2 parts of styrene, 28.8 parts of 1,3-butadiene, and 0.021 parts of tetramethylethylenediamine were charged, and polymerization was started; after 10 minutes had passed, 5.8 parts of styrene and 24.2 parts of 1,3-butadiene were continuously added over 50 minutes, and then 22.0 parts of 1,3-butadiene was continuously added over 30 minutes, followed by further stirring for 10 minutes; 0.011 parts of silicon tetrachloride was used instead of 0.016 parts of tin tetrachloride and N-phenylpyrrolidone was not added. The resulting styrene butadiene copolymer (SBR10) was measured in the same manner as in Production Example 1, and the results are shown in Table 1.

### [Table 1]

**Table 1**

| | Production Example 1 | Production Example 2 | Production Example 3 | Production Example 4 | Production Example 5 | Production Example 6 | Production Example 7 | Production Example 8 | Production Example 9 | Production Example 10 |
|---|---|---|---|---|---|---|---|---|---|---|
| Coupling agent | SnCl4 | SnCl4 | Oct2SnCl2 | SnCl4 | SnCl4 | SnCl4 | SnCl4 | SnCl4 | SnCl4 | SiCl4 |
| Modifier | NPP | Polyorganosiloxane and APS | NPP | BTAS | NPP | NMP | NPP | NPP | NPP | - |
| Type of styrene butadiene copolymer | SBR1 | SBR2 | SBR3 | SBR4 | SBRS | SBR6 | SBR7 | SBR8 | SBR9 | SBR10 |
| Weight average molecular weight | 500,000 | 584,000 | 439,000 | 481,000 | 524,000 | 512,000 | 533,000 | 547,000 | 422,000 | 528,000 |
| Molecular weight distribution (Mw/Mn) | 1 46 | 1.54 | 1.18 | 1.49 | 1.45 | 1.47 | 1.47 | 1.48 | 1.39 | 1.48 |
| Styrene unit content [% by weight] | 15.3 | 14.7 | 15.0 | 15.3 | 10.1 | 18.0 | 9.8 | 4.9 | 21.3 | 25.8 |
| Vinyl bond content [% by weight] | 30.5 | 26.6 | 28.6 | 31.6 | 29.8 | 13.8 | 14.3 | 13.6 | 63.7 | 12.1 |
| Coupling ratio [% by weight] | 34.5 | 48.6 | 38.5 | 40.2 | 36.3 | 35.4 | 37.0 | 38.2 | 31.8 | 45.0 |
| Mooney viscosity ML(1+4) 100°C | 52.8 | 52.1 | 452 | 527 | 53.4 | 492 | 51.5 | 52.1 | 46.3 | 54.6 |
| Glass transition temperature [°C] | -58.3 | -652 | -63.1 | -60.0 | -64.4 | -70.2 | -79.2 | -85.2 | -19.7 | -64.5 |

| | | | | | | | | | | |
|---|---|---|---|---|---|---|---|---|---|---|
| SnCl4: Tin tetrachloride NPP: N-phenylpyrrolidone NMP: N-methylpyrrolidone APS: 3-(2-aminoethylamino)propyltrimethoxysilane Oct2SnCl2: Dioctytin dichloride BTAS: N,N-bis(trimethylsilyl)aminopropylmethyldiethoxysilane | | | | | | | | | | |

### [Example 1]

In a 250-ml Banbury mixer, 60 parts of natural rubber, 20 parts of SBR1 obtained in Production Example 1, and 20 parts of butadiene rubber (available from ZEON Corporation, trade name "Nipol BR1220") were masticated for 30 seconds. Next, 50 parts of carbon black (available from Tokai Carbon Co., Ltd., trade name "SEAST SO", nitrogen adsorption specific surface area measured by the BET method: 42 m²/g, iodine adsorption: 44 mg/g, DBP absorption measured by the A method: 115 cm³/100 g), 3 parts of zinc oxide (available from Sakai Chemical Industry Co., Ltd., trade name "Zinc oxide II"), 4 parts of stearic acid (available from NOF CORPORATION, trade name "BEAD STEARIC ACID CAMELLIA "), 4 parts of an antioxidant 6PPD (available from Ouchi Shinko Chemical Industrial Co., Ltd., trade name "NOCRAC 6C"), 2 parts of paraffin wax (available from NIPPON SEIRO CO., LTD. trade name "paraffin wax 135"), and 2 parts of p-t-butylphenol-acetylene resin (available from BASF SE, trade name "Koresin") were added, followed by mixing for another 3.0 minutes. Then, the kneaded product was discharged from the mixer. The temperature of the kneaded product at the end of kneading was 150°C. In the next step, the kneaded product was combined with 1.0 part of sulfur (available from Tsurumi Chemical Industry Co., Ltd., trade name "GOLDEN FLOWER SULFUR POWDER 325 mesh") and 1.5 parts of a cross-linking accelerator N-(t-butyl)-2-benzothiazolylsulfaneamide (available from Lanxess AG, trade name "Vulkacit NZ/EG-C"), and kneaded on an open roll mill at 50°C. Then, a sheet-shaped rubber composition was taken out. The obtained rubber composition was press cross-linked at 160°C for 25 minutes to prepare a cross-linked rubber test piece, which was evaluated for heat buildup, reinforcing ability, and tear resistance. The results are shown in Table 2.

### [Examples 2 to 8]

Rubber compositions were obtained in the same manner as in Example 1 except that SBR2 to SBR8 obtained in Production Examples 2 to 8 were each used in an amount of 20 parts instead of 20 parts of SBR1 obtained in Production Example 1, and cross-linked rubber test pieces were prepared and evaluated in the same manner as in Example 1. The results are shown in Table 2.

### [Example 9]

A rubber composition was obtained in the same manner as in Example 1 except that the amount of polybutadiene used was changed from 20 parts to 30 parts and 10 parts of SSBR8 obtained in Production Example 8 was used instead of 20 parts of SBR1 obtained in Production Example 1, and a cross-linked rubber test piece was prepared and evaluated in the same manner as in Example 1. The results are shown in Table 2.

### [Example 10]

A rubber composition was obtained in the same manner as in Example 1 except that 40 parts of SBR8 obtained in Production Example 8 was used instead of 20 parts of SBR1 obtained in Production Example 1 and 20 parts of polybutadiene was not used, and a cross-linked rubber test piece was prepared and evaluated in the same manner as in Example 1. The results are shown in Table 2.

### [Example 11]

A rubber composition was obtained in the same manner as in Example 1 except that 20 parts of SBR8 obtained in Production Example 8 was used instead of 20 parts of SBR1 obtained in Production Example 1 and 2 parts of p-t-butylphenol-acetylene resin was not used, and a cross-linked rubber test piece was prepared and evaluated in the same manner as in Example 1. The results are shown in Table 2.

### [Comparative Example 1]

A rubber composition was obtained in the same manner as in Example 1 except that the amount of natural rubber used was changed from 60 parts to 80 parts and 20 parts of SBR1 obtained in Production Example 1 was not used, and a cross-linked rubber test piece was prepared and evaluated in the same manner as in Example 1. The results are shown in Table 2.

### [Comparative Examples 2 and 3]

Rubber compositions were obtained in the same manner as in Example 1 except that SBR9 and SBR10 obtained in Production Examples 9 and 10 were each used in an amount of 20 parts instead of 20 parts of SBR1 obtained in Production Example 1, and a cross-linked rubber test piece was prepared and evaluated in the same manner as in Example 1. The results are shown in Table 2.

### [Table 2]

**Table 2**

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Comp. Ex. 1 | Comp. Ex. 2 | Comp. Ex. 3 |
|---|---|---|---|---|---|---|---|---|---|---|---|---|---|---|---|---|
| Composition of rubber composition | | | | | | | | | | | | | | | | |
| | SBR1 | [parts] | 20.0 | - | - | - | - | - | - | - | - | - | - | - | - | - |
| | SBR2 | [parts] | - | 20.0 | - | - | - | - | - | - | - | - | - | - | - | - |
| | SBR3 | [parts] | - | - | 20.0 | - | - | - | - | - | - | - | - | - | - | - |
| | SBR4 | [parts] | - | - | - | 20.0 | - | - | - | - | - | - | - | - | - | - |
| | SBR5 | [parts] | - | - | - | - | 20.0 | - | - | - | - | - | - | - | - | - |
| | SBR6 | [parts] | - | - | - | - | - | 20.0 | - | - | - | - | - | - | - | - |
| | SBR7 | [parts] | - | - | - | - | - | - | 20.0 | - | - | - | - | - | - | - |
| | SBR8 | [parts] | - | - | - | - | - | - | - | 20.0 | 100 | 40.0 | 20.0 | - | - | - |
| | SBR9 | [parts] | - | - | - | - | - | - | - | - | - | - | - | - | 20.0 | - |
| | SBR10 | [parts] | - | - | - | - | - | - | - | - | - | - | - | - | - | 20.0 |
| | Natural rubber | [parts] | 60.0 | 60.0 | 60.0 | 60.0 | 60.0 | 60.0 | 60.0 | 60.0 | 60.0 | 60.0 | 60.0 | 80.0 | 60.0 | 60.0 |
| | Polybutadiene rubber | [parts] | 20.0 | 20.0 | 20.0 | 20.0 | 20.0 | 20.0 | 20.0 | 20.0 | 30.0 | - | 20.0 | 20.0 | 20.0 | 20.0 |
| | Carbon black | [parts] | 50.0 | 50.0 | 50.0 | 50.0 | 50.0 | 50.0 | 50.0 | 50.0 | 50.0 | 50.0 | 50.0 | 50.0 | 50.0 | 50.0 |
| | Resin | [parts] | 2.0 | 2.0 | 2.0 | 2.0 | 2.0 | 2.0 | 2.0 | 2.0 | 2.0 | 2.0 | - | 2.0 | 2.0 | 20 |

| Evaluations | | | | | | | | | | | | | | | | |
|---|---|---|---|---|---|---|---|---|---|---|---|---|---|---|---|---|
| | Heat buildup | | 111 | 115 | 110 | 120 | 113 | 115 | 119 | 121 | 125 | 125 | 122 | 100 | 93 | 98 |
| | Reinforcing ability | | 103 | 102 | 107 | 101 | 104 | 104 | 105 | 105 | 108 | 97 | 100 | 100 | 97 | 92 |
| | Tear resistance | | 112 | 108 | 115 | 105 | 104 | 115 | 106 | 100 | 117 | 97 | 94 | 100 | 96 | 102 |

Tables 1 and 2 show that rubber compositions for sidewalls each comprising a solution-polymerized aromatic vinyl-conjugated diene copolymer and carbon, wherein the solution-polymerized aromatic vinyl-conjugated diene copolymer had a functional group capable of interacting with carbon, the content of an aromatic vinyl monomer unit was 0.5 to 25% by weight, and the vinyl bond content in a conjugated diene monomer unit was 0 to 50% by weight, provided cross-linked rubbers having reduced heat buildup and having reinforcing ability and tear resistance in a good balance (Examples 1 to 11).

In contrast, in the case where the solution-polymerized aromatic vinyl-conjugated diene copolymer was not used (Comparative Example 1), in the case where a solution-polymerized aromatic vinyl-conjugated diene copolymer where the vinyl bond content in the conjugated diene monomer unit was excessively large was used (Comparative Example 2), and in the case where a solution-polymerized aromatic vinyl-conjugated diene copolymer without a functional group capable of interacting with carbon was used (Comparative Example 3), the resulting cross-linked rubbers had inferior heat buildup.

## Claims

1. A rubber composition for sidewalls, comprising a solution-polymerized aromatic vinyl-conjugated diene copolymer and carbon,
wherein the solution-polymerized aromatic vinyl-conjugated diene copolymer has a functional group capable of interacting with carbon,
the content of an aromatic vinyl monomer unit is 0.5 to 25% by weight in the total monomer units constituting the solution-polymerized aromatic vinyl-conjugated diene copolymer, and
the vinyl bond content of a conjugated diene monomer unit in the solution-polymerized aromatic vinyl-conjugated diene copolymer is 0 to 50% by weight.

2. The rubber composition for sidewalls according to claim 1, wherein the solution-polymerized aromatic vinyl-conjugated diene copolymer has a glass transition temperature (Tg) of -50°C or lower.

3. The rubber composition for sidewalls according to claim 1 or 2, wherein the carbon has a nitrogen adsorption specific surface area measured by the BET method of 85 m²/g or lower, an iodine adsorption of 90 mg/g or lower, and a dibutyl phthalate absorption of 140 cm³/100 g or lower.

4. The rubber composition for sidewalls according to any one of claims 1 to 3, further comprising a rubber component other than the solution-polymerized aromatic vinyl-conjugated diene copolymer,
wherein the amount of the solution-polymerized aromatic vinyl-conjugated diene copolymer present is 10 to 80% by weight in 100% by weight of the total rubber components.

5. The rubber composition for sidewalls according to any one of claims 1 to 4, further comprising a natural rubber, the natural rubber being present in an amount of 10 to 80% by weight in 100% by weight of the total rubber components.

6. The rubber composition for sidewalls according to any one of claims 1 to 5, further comprising a polybutadiene rubber, the polybutadiene rubber being present in an amount of 10 to 80% by weight in 100% by weight of the total rubber components.

7. The rubber composition for sidewalls according to any one of claims 1 to 6, further comprising a resin.

8. The rubber composition for sidewalls according to claim 7, wherein the amount of the resin is 0.1 to 5 parts by weight relative to 100 parts by weight of the rubber components including the solution-polymerized aromatic vinyl-conjugated diene copolymer.

9. The rubber composition for sidewalls according to any one of claims 1 to 8, wherein the amount of the carbon is 10 to 200 parts by weight relative to 100 parts by weight of the rubber components including the solution-polymerized aromatic vinyl-conjugated diene copolymer.

10. The rubber composition for sidewalls according to any one of claims 1 to 9, wherein the functional group capable of interacting with carbon is at least one selected from the group consisting of a nitrogen atom-containing functional group, a tin atom-containing functional group, and an oxygen atom-containing functional group.

11. The rubber composition for sidewalls according to any one of claims 1 to 10, further comprising a cross-linking agent.

12. A cross-linked rubber obtained by cross-linking the rubber composition for sidewalls according to any one of claims 1 to 11.

13. A sidewall comprising the cross-linked rubber according to claim 12.
